# EUROPEAN PATENT APPLICATION

(11) **EP 4 819 703 A1**
(43) Date of publication of application: **07.10.2026**
(21) Application number: 24896314.2
(22) Date of filing: 18.11.2024
(51) Int. Cl.: H04W 56/00

(54) **COMMUNICATION METHOD AND APPARATUS**

(30) Priority: 01.12.2023 CN 202311653034
(71) Applicant: Huawei Technologies Co., Ltd., Shenzhen, Guangdong 518129 (CN)
(72) Inventor: CHEN, Ying, Shenzhen, Guangdong 518129 (CN); WANG, Jun, Shenzhen, Guangdong 518129 (CN)
(74) Representative: Huawei European IPR
(86) International application number: PCT/CN2024/132726
(87) International publication number: WO 2025/113223

(57) **Abstract**

Embodiments of this application relate to the communication field and provide a communication method and apparatus, to reduce a quantity of GNSS measurements performed by a terminal device, thereby reducing energy consumption of the terminal device. The method includes: sending first information to a network device, and receiving second information from the network device. The first information includes first indication information, the first indication information indicates a time interval from performing first global navigation satellite system GNSS measurement by the terminal device to adjust an oscillator frequency offset to performing second GNSS measurement to adjust the oscillator frequency offset, the second information indicates that the terminal device is expected not to perform GNSS measurement within a first duration to adjust the oscillator frequency offset, and the first duration is determined based on the first information.

## Description

This application claims priority to Chinese Patent Application No. 202311653034.6, filed with the China National Intellectual Property Administration on December 1, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

In satellite communication, to maintain uplink time and frequency synchronization, a terminal device needs to compensate for an uplink time offset (referred to as time offset for short) and an uplink frequency offset (referred to as frequency offset for short). When implementing uplink time synchronization, the terminal device needs to estimate a timing advance (timing advance, TA), where the TA includes a propagation delay (referred to as a service link TA) from the terminal device to a satellite and a propagation delay (referred to as a common TA) from the satellite to a reference point (reference point, RP). The propagation delay from the terminal device to the satellite is calculated by the terminal device based on ephemeris information and global navigation satellite system (global navigation satellite system, GNSS) information. When implementing uplink frequency synchronization, the terminal device needs to calculate a Doppler frequency offset based on the ephemeris information and the GNSS information, to obtain an oscillator frequency offset, so as to perform frequency offset pre-compensation when sending uplink signals.

It can be learned from the foregoing that, regardless of time offset adjustment or frequency offset adjustment, the terminal device needs to obtain the GNSS information for implementation. The GNSS information is obtained by the terminal device by performing GNSS measurement. However, to maintain uplink synchronization, the terminal device needs to frequently perform GNSS measurement, causing an increase in energy consumption of the terminal device.

### SUMMARY

Embodiments of this application provide a communication method and apparatus, to reduce a quantity of GNSS measurements performed by a terminal device.

To achieve the foregoing objective, this application uses the following technical solutions.

According to a first aspect, a communication method is provided. The method may be performed by a terminal device, or may be performed by a component of the terminal device, for example, a processor, a chip, or a chip system of the terminal device, or may be implemented by a logical module or software that can implement all or a part of the terminal device. The method includes: sending first information to a network device, and receiving second information from the network device. The first information includes first indication information, the first indication information indicates a time interval from performing first global navigation satellite system GNSS measurement by the terminal device to adjust an oscillator frequency offset to performing second GNSS measurement to adjust the oscillator frequency offset, the second information indicates that the terminal device is expected not to perform GNSS measurement within a first duration to adjust the oscillator frequency offset, and the first duration is determined based on the first information.

According to the communication method, the terminal device reports the first information to the network device, to indicate a stability capability of a crystal oscillator or a valid duration of the oscillator frequency offset obtained through one frequency offset adjustment, so that the network device can configure, for the terminal device, a maximum duration (namely, the first duration) after which a next GNSS measurement for adjusting the oscillator frequency offset is performed. This can ensure that the terminal device can still maintain uplink frequency synchronization even if the terminal device does not perform GNSS measurement within the first duration, that is, the terminal device can perform GNSS measurement within a maximum time range, thereby reducing a quantity of GNSS measurements performed by the terminal device due to a frequency offset, and further reducing energy consumption of the terminal device.

In a possible design solution, the first information may further include second indication information, the second indication information indicates a time interval from performing the first GNSS measurement by the terminal device to adjust a timing advance to performing the second GNSS measurement to adjust the timing advance, and the second information further indicates that the terminal device is expected not to perform GNSS measurement within the first duration to adjust the timing advance. In this way, the terminal device may further report a valid duration of the timing advance obtained through adjustment by performing one GNSS measurement, so that the network device may consider the valid duration of the oscillator frequency offset and the valid duration of the timing advance to configure the first duration. This can ensure that the terminal device can still maintain uplink time and frequency synchronization even if the terminal device does not perform GNSS measurement within the first duration, thereby reducing a quantity of GNSS measurements performed by the terminal device due to a frequency offset and a time offset.

In a possible design solution, the first duration may be a smaller value in a valid duration of the oscillator frequency offset and a valid duration of the timing advance, the valid duration of the oscillator frequency offset is determined based on the first indication information, and the valid duration of the timing advance is determined based on the second indication information. Therefore, the first duration is configured as the smaller value in a valid duration of the time offset and a valid duration of the frequency offset. This can ensure that after the first duration ends, GNSS measurement is performed to adjust both the oscillator frequency offset and the timing advance, thereby reducing the quantity of GNSS measurements.

In a possible design solution, the method provided in this embodiment of this application may further include: determining, within a first time period having a duration equal to the first duration, not to perform GNSS measurement. A start time of the first time period is a moment at which the second information is received plus a first preset duration. Therefore, after receiving the second information, the terminal device may trigger the first duration after waiting for a period of time, and may not perform GNSS measurement within the first duration to ensure uplink frequency synchronization or uplink time and frequency synchronization, to reduce the quantity of GNSS measurements.

In a possible design solution, the method provided in this embodiment of this application may further include: receiving third information from the network device within the first preset duration starting from an end of the first time period, where the third information indicates the terminal device to adjust the oscillator frequency offset or adjust the oscillator frequency offset and the timing advance, and the third information includes an adjustment parameter of the oscillator frequency offset or an adjustment parameter of the oscillator frequency offset and an adjustment parameter of the timing advance; and determining, within a second time period having a duration equal to the first duration, not to perform GNSS measurement, where a start time of the second time period is a moment at which the third information is received plus the first preset duration. Therefore, after the first duration ends, the terminal device may receive the third information from the network device, to adjust the oscillator frequency offset or adjust the oscillator frequency offset and the timing advance again, without performing GNSS measurement for adjustment. This can also reduce a quantity of GNSS measurements. In addition, after the terminal device receives the third information and performs adjustment, the oscillator frequency offset or the oscillator frequency offset and the timing advance are stable again, and the first duration may be triggered again to reduce the quantity of performed GNSS measurements.

In a possible design solution, the method provided in this embodiment of this application may further include: determining, at an end moment of the first time period, to perform GNSS measurement. Therefore, the terminal device may perform GNSS measurement at an end moment of the first duration to adjust the oscillator frequency offset or the oscillator frequency offset and the timing advance, without waiting for an adjustment indication delivered by the network device, thereby increasing an adjustment rate.

In a possible design solution, determining, at the end moment of the first time period, to perform GNSS measurement may include: failing to receive third information within the first time period, where the third information indicates the terminal device to adjust the oscillator frequency offset or adjust the oscillator frequency offset and the timing advance, and the third information includes an adjustment parameter of the oscillator frequency offset or an adjustment parameter of the oscillator frequency offset and an adjustment parameter of the timing advance; and determining, at the end moment of the first time period, to perform GNSS measurement. Therefore, the terminal device may further determine, within the first time period, whether there is an adjustment indication from the network device. When no adjustment indication is received within the first time period, the terminal device may still perform GNSS measurement at the end moment of the first duration to adjust the oscillator frequency offset or the oscillator frequency offset and the timing advance. It should be understood that, when the adjustment indication is received within the first time period, the terminal device may adjust the oscillator frequency offset or the oscillator frequency offset and the timing advance in advance based on the adjustment indication without performing GNSS measurement.

In a possible design solution, the method provided in this embodiment of this application may further include: failing to receive third information within a third time period, where the third information indicates the terminal device to adjust the oscillator frequency offset or adjust the oscillator frequency offset and the timing advance, the third information includes an adjustment parameter of the oscillator frequency offset or an adjustment parameter of the oscillator frequency offset and an adjustment parameter of the timing advance, and the third time period is the first time period plus the first preset duration; and determining, at an end moment of the third time period, to perform GNSS measurement. Therefore, the terminal device may further wait for a period of time based on the first duration, and determine whether there is an adjustment indication from the network device. If no adjustment indication from the network device is still received, the terminal device performs GNSS measurement at an end moment of the waiting duration to adjust the oscillator frequency offset or the oscillator frequency offset and the timing advance.

In a possible design solution, the method provided in this embodiment of this application may further include: sending fourth information to the network device within a first time period having a duration equal to the first duration, where the fourth information indicates that the terminal device has performed GNSS measurement within the first time period, and a start time of the first time period is a moment at which the second information is received plus a first preset duration; and determining, within a fourth time period having a duration equal to the first duration, not to perform GNSS measurement, where a start time of the fourth time period is a moment at which the fourth information is sent plus the first preset duration. Therefore, if the terminal device needs to perform GNSS measurement in the first duration that is re-triggered due to some circumstances, the terminal device needs to notify, by using the fourth information, the network device that the terminal device has performed GNSS measurement within the first duration, and re-triggers the first duration.

In a possible design solution, the fourth information specifically indicates a remaining time before the terminal device performs the second GNSS measurement. Therefore, the terminal device may implicitly indicate, by indicating a duration to a next GNSS measurement, that the terminal device has performed GNSS measurement within the first duration.

In a possible design solution, the first information may be sent in a radio resource control RRC setup request message or an RRC connection setup complete message.

In a possible design solution, the time interval from performing the first GNSS measurement to adjust the oscillator frequency offset to performing the second GNSS measurement to adjust the oscillator frequency offset is related to temperature. Because a stable duration of the crystal oscillator is related to the temperature, a higher temperature may indicate a shorter stable duration of the crystal oscillator. The terminal device may update and report the stable duration of the crystal oscillator in real time based on temperature changes, so that accuracy of setting the first duration can be ensured.

According to a second aspect, a communication method is provided. The method may be performed by a network device, or may be performed by a component of the network device, for example, a processor, a chip, or a chip system of the network device, or may be implemented by a logical module or software that can implement all or a part of the network device. The method includes: receiving first information from a terminal device, and sending second information to the terminal device. The first information includes first indication information, the first indication information indicates a time interval from performing first global navigation satellite system GNSS measurement by the terminal device to adjust an oscillator frequency offset to performing second GNSS measurement to adjust the oscillator frequency offset, the second information indicates that the terminal device is expected not to perform GNSS measurement within a first duration to adjust the oscillator frequency offset, and the first duration is determined based on the first information.

In a possible design solution, the first information may further include second indication information, the second indication information indicates a time interval from performing the first GNSS measurement by the terminal device to adjust a timing advance to performing the second GNSS measurement to adjust the timing advance, and the second information further indicates that the terminal device is expected not to perform GNSS measurement within the first duration to adjust the timing advance.

In a possible design solution, the first duration may be a smaller value in a valid duration of the oscillator frequency offset and a valid duration of the timing advance, the valid duration of the oscillator frequency offset is determined based on the first indication information, and the valid duration of the timing advance is determined based on the second indication information.

In a possible design solution, the method provided in this embodiment of this application may further include: determining, within a first time period having a duration equal to the first duration, not to perform frequency offset detection or frequency offset and time offset detection on an uplink signal, where a start time of the first time period is a moment at which the second information is sent plus a second preset duration. Therefore, the network device may also locally configure the first duration. The network device may not perform frequency offset detection or frequency offset and time offset detection on the uplink signal within the first duration. Therefore, the network device does not need to send an adjustment indication to the terminal device within the first duration, thereby reducing complexity of processing the uplink signal by the network device and reducing signaling overheads of the network device.

In a possible design solution, the method provided in this embodiment of this application may further include: sending third information to the terminal device within the second preset duration starting from an end of the first time period, where the third information indicates the terminal device to adjust the oscillator frequency offset or adjust the oscillator frequency offset and the timing advance, and the third information includes an adjustment parameter of the oscillator frequency offset or an adjustment parameter of the oscillator frequency offset and an adjustment parameter of the timing advance; and determining, within a second time period having a duration equal to the first duration, not to perform frequency offset detection or frequency offset and time offset detection on the uplink signal, where a start time of the second time period is a moment at which the third information is sent plus the second preset duration. Therefore, after the first duration ends, the network device may send an adjustment indication to the terminal device, so that the terminal device does not need to perform GNSS measurement to adjust the oscillator frequency offset or adjust the oscillator frequency offset and the timing advance, and may re-trigger the first duration after the adjustment indication is sent.

In a possible design solution, the method provided in this embodiment of this application may further include: determining, within a third time period, not to send third information to the terminal device. The third information indicates the terminal device to adjust the oscillator frequency offset or adjust the oscillator frequency offset and the timing advance, the third information includes an adjustment parameter of the oscillator frequency offset or an adjustment parameter of the oscillator frequency offset and an adjustment parameter of the timing advance, and the third time period is the first time period plus the second preset duration.

In a possible design solution, the method provided in this embodiment of this application may further include: receiving fourth information from the terminal device within a first time period having a duration equal to the first duration, where the fourth information indicates that the terminal device has performed GNSS measurement within the first time period, and a start time of the first time period is a moment at which the second information is sent plus a second preset duration; and determining, within a fourth time period having a duration equal to the first duration, not to perform frequency offset detection or frequency offset and time offset detection on an uplink signal, where a start time of the fourth time period is a moment at which the fourth information is received plus the second preset duration.

In a possible design solution, the fourth information specifically indicates a remaining time before the terminal device performs the second GNSS measurement.

In a possible design solution, the first information may be sent in a radio resource control RRC setup request message or an RRC connection setup complete message.

In a possible design solution, the time interval from performing the first GNSS measurement to adjust the oscillator frequency offset to performing the second GNSS measurement to adjust the oscillator frequency offset is related to temperature.

For technical effect of the method according to the second aspect, refer to the descriptions of the technical effect of the method according to the first aspect. Details are not described herein again.

According to a third aspect, a communication method is provided. The method may be performed by a terminal device, or may be performed by a component of the terminal device, for example, a processor, a chip, or a chip system of the terminal device, or may be implemented by a logical module or software that can implement all or a part of the terminal device. The method includes: sending first information to a network device, and receiving second information from the network device. The first information includes first indication information and second indication information. The first indication information indicates a time interval from performing first global navigation satellite system GNSS measurement by the terminal device to adjust an oscillator frequency offset to performing second GNSS measurement to adjust the oscillator frequency offset, and the second indication information indicates a time interval from performing the first GNSS measurement by the terminal device to adjust a timing advance to performing the second GNSS measurement to adjust the timing advance. The second information indicates that the terminal device is expected not to perform GNSS measurement within a first duration to adjust the oscillator frequency offset, and indicates that the terminal device is expected not to perform GNSS measurement within a second duration to adjust the timing advance. The first duration is determined based on the first indication information, and the second duration is determined based on the second indication information.

According to the communication method, the terminal device reports the first information to the network device, to indicate a stability capability of a crystal oscillator or a valid duration of the oscillator frequency offset and a valid duration of the timing advance obtained through one frequency offset adjustment, so that the network device can separately configure, for the terminal device, a maximum duration (namely, the first duration) after which a next GNSS measurement for adjusting the oscillator frequency offset is performed, and a maximum duration (namely, the second duration) after which the next GNSS measurement for adjusting the timing advance is performed. This can ensure that the terminal device can still maintain uplink frequency synchronization even if the terminal device does not perform GNSS measurement within the first duration, and can still maintain uplink time synchronization even if the terminal device does not perform GNSS measurement within the second duration, that is, the terminal device can perform GNSS measurement within a maximum time range, thereby reducing a quantity of GNSS measurements performed by the terminal device due to a frequency offset and a time offset, and further reducing energy consumption of the terminal device.

In a possible design solution, the method provided in this embodiment of this application may further include: determining, within a first time period having a duration equal to the first duration, not to perform GNSS measurement to adjust the oscillator frequency offset, and determining, within a second time period having a duration equal to the second duration, not to perform GNSS measurement to adjust the timing advance, where a start time of the first time period and a start time of the second time period are a moment at which the second information is received plus a first preset duration. Therefore, based on the second information of the network device, the terminal device may still maintain uplink frequency synchronization even if the terminal device does not perform GNSS measurement within the first duration, and may still maintain uplink time synchronization even if the terminal device does not perform GNSS measurement within the second duration.

In a possible design solution, the method provided in this embodiment of this application may further include: when the first duration is less than the second duration, determining, at an end moment of the first time period, to perform GNSS measurement to adjust the oscillator frequency offset and the timing advance; or when the first duration is greater than or equal to the second duration, determining, at an end moment of the second time period, to perform GNSS measurement to adjust the oscillator frequency offset and the timing advance. Therefore, to further reduce the quantity of performed GNSS measurements introduced due to a frequency offset and a time offset, the terminal device may determine a value of the first duration and a value of the second duration, and perform GNSS measurement to adjust both the oscillator frequency offset and the timing advance at an end moment of a shorter duration.

In a possible design solution, determining, at the end moment of the first time period, to perform GNSS measurement to adjust the oscillator frequency offset and the timing advance may include: failing to receive third information within the first time period, where the third information indicates the terminal device to adjust the oscillator frequency offset and the timing advance, and the third information includes an adjustment parameter of the oscillator frequency offset and an adjustment parameter of the timing advance; and determining, at the end moment of the first time period, to perform GNSS measurement to adjust the oscillator frequency offset and the timing advance. Therefore, when the first duration is less than the second duration, the terminal device may determine, within the triggered first duration, whether the network device sends an adjustment indication. If no adjustment indication is received, the terminal device performs GNSS measurement to adjust both the oscillator frequency offset and the timing advance at the end moment of the first duration.

In a possible design solution, determining, at the end moment of the second time period, to perform GNSS measurement to adjust the oscillator frequency offset and the timing advance may include: failing to receive third information within the second time period, where the third information indicates the terminal device to adjust the oscillator frequency offset and the timing advance, and the third information includes an adjustment parameter of the oscillator frequency offset and an adjustment parameter of the timing advance; and determining, at the end moment of the second time period, to perform GNSS measurement to adjust the oscillator frequency offset and the timing advance. Therefore, when the second duration is less than the first duration, the terminal device may determine, within the triggered second duration, whether the network device sends an adjustment indication. If no adjustment indication is received, the terminal device performs GNSS measurement to adjust both the oscillator frequency offset and the timing advance at the end moment of the second duration.

In a possible design solution, the method provided in this embodiment of this application may further include: determining, within a third time period having a duration equal to the first duration, not to perform GNSS measurement to adjust the oscillator frequency offset; and determining, within a fourth time period having a duration equal to the second duration, not to perform GNSS measurement to adjust the timing advance, where a start time of the third time period and a start time of the fourth time period are a moment at which GNSS measurement is performed last time plus the first preset duration. Therefore, after re-adjusting the oscillator frequency offset and the timing advance, the terminal device may re-trigger the first duration and the second duration.

In a possible design solution, the method provided in this embodiment of this application may further include: receiving third information from the network device within the first time period or the second time period, where the third information indicates the terminal device to adjust the oscillator frequency offset and the timing advance, and the third information includes an adjustment parameter of the oscillator frequency offset and an adjustment parameter of the timing advance; determining, within a fifth time period having a duration equal to the first duration, not to perform GNSS measurement to adjust the oscillator frequency offset; and determining, within a sixth time period having a duration equal to the second duration, not to perform GNSS measurement to adjust the timing advance, where a start time of the fifth time period and a start time of the sixth time period are a moment at which the third information is received plus the first preset duration. Therefore, the terminal device may adjust the oscillator frequency offset and the timing advance without performing GNSS measurement based on an adjustment indication sent by the network device, thereby reducing a quantity of GNSS measurements.

In a possible design solution, fourth information is sent to the network device within the first time period, where the fourth information indicates that the terminal device has performed GNSS measurement within the first time period; or fourth information is sent to the network device within the second time period, where the fourth information indicates that the terminal device has performed GNSS measurement within the second time period; and determining, within a seventh time period having a duration equal to the first duration, not to perform GNSS measurement to adjust the oscillator frequency offset, and determining, within an eighth time period having a duration equal to the second duration, not to perform GNSS measurement to adjust the timing advance, where a start time of the seventh time period and a start time of the eighth time period are a moment at which the fourth information is sent plus the first preset duration. Therefore, if the terminal device needs to perform GNSS measurement within the first duration or the second duration that is re-triggered due to some circumstances, the terminal device needs to notify, by using the fourth information, the network device that the terminal device has performed GNSS measurement within the first duration or the second duration, and re-triggers the first duration and the second duration.

In a possible design solution, the fourth information specifically indicates a remaining time before the terminal device performs the second GNSS measurement. Therefore, the terminal device may implicitly indicate, by indicating a duration to a next GNSS measurement, that the terminal device has performed GNSS measurement within the first duration or the second duration.

In a possible design solution, the first information may be sent in a radio resource control RRC setup request message or an RRC connection setup complete message.

In a possible design solution, the time interval from performing the first GNSS measurement to adjust the oscillator frequency offset to performing the second GNSS measurement to adjust the oscillator frequency offset is related to temperature.

According to a fourth aspect, a communication method is provided. The method may be performed by a network device, or may be performed by a component of the network device, for example, a processor, a chip, or a chip system of the network device, or may be implemented by a logical module or software that can implement all or a part of the network device. The method includes: receiving first information from a terminal device, and sending second information to the terminal device. The first information includes first indication information and second indication information. The first indication information indicates a time interval from performing first global navigation satellite system GNSS measurement by the terminal device to adjust an oscillator frequency offset to performing second GNSS measurement to adjust the oscillator frequency offset, and the second indication information indicates a time interval from performing the first GNSS measurement by the terminal device to adjust a timing advance to performing the second GNSS measurement to adjust the timing advance. The second information indicates that the terminal device is expected not to perform GNSS measurement within a first duration to adjust the oscillator frequency offset, and indicates that the terminal device is expected not to perform GNSS measurement within a second duration to adjust the timing advance. The first duration is determined based on the first indication information, and the second duration is determined based on the second indication information.

In a possible design solution, the method provided in this embodiment of this application may further include: determining, within a first time period having a duration equal to the first duration, not to perform frequency offset detection on an uplink signal, and determining, within a second time period having a duration equal to the second duration, not to perform time offset detection on the uplink signal, where a start time of the first time period and a start time of the second time period are a moment at which the second information is sent plus a second preset duration.

In a possible design solution, the method provided in this embodiment of this application may further include: sending third information to the terminal device within the first time period or the second time period, where the third information indicates the terminal device to adjust the oscillator frequency offset and the timing advance, and the third information includes an adjustment parameter of the oscillator frequency offset and an adjustment parameter of the timing advance; determining, within a fifth time period having a duration equal to the first duration, not to perform frequency offset detection on the uplink signal; and determining, within a sixth time period having a duration equal to the second duration, not to perform time offset detection on the uplink signal, where a start time of the fifth time period and a start time of the sixth time period are a moment at which the third information is sent plus the second preset duration.

In a possible design solution, the method provided in this embodiment of this application may further include: receiving fourth information from the terminal device within the first time period, where the fourth information indicates that the terminal device has performed GNSS measurement within the first time period; or receiving fourth information from the terminal device within the second time period, where the fourth information indicates that the terminal device has performed GNSS measurement within the second time period; and determining, within a seventh time period having a duration equal to the first duration, not to perform frequency offset detection on the uplink signal, and determining, within an eighth time period having a duration equal to the second duration, not to perform time offset detection on the uplink signal, where a start time of the seventh time period and a start time of the eighth time period are a moment at which the fourth information is sent plus a first preset duration.

In a possible design solution, the first information may be sent in a radio resource control RRC setup request message or an RRC connection setup complete message.

In a possible design solution, the time interval from performing the first GNSS measurement to adjust the oscillator frequency offset to performing the second GNSS measurement to adjust the oscillator frequency offset is related to temperature.

For technical effect of the method according to the fourth aspect, refer to the descriptions of the technical effect of the method according to the second aspect. Details are not described herein again.

According to a fifth aspect, a communication apparatus is provided to implement the foregoing methods. The communication apparatus may be the terminal device in the first aspect or the third aspect, or an apparatus including the terminal device, or an apparatus included in the terminal device, for example, a chip. The communication apparatus includes a corresponding module, unit, or means (means) for implementing the method according to the first aspect or the third aspect. The module, unit, or means may be implemented by hardware or software, or implemented by hardware by executing corresponding software. The hardware or software includes one or more modules or units corresponding to the foregoing functions.

In some possible designs, the communication apparatus includes a processing module and a transceiver module. The processing module is configured to perform a processing function of the terminal device in the first aspect or the third aspect. The processing module is configured to perform a sending/receiving function of the terminal device in the first aspect or the third aspect.

In a possible design solution, the transceiver module may include a receiving module and a sending module. The sending module is configured to implement a sending function of the communication apparatus according to the fifth aspect, and the receiving module is configured to implement a receiving function of the communication apparatus according to the fifth aspect.

In a possible design solution, the communication apparatus according to the fifth aspect may further include a storage module, and the storage module stores a program or instructions. When the processing module executes the program or the instructions, the communication apparatus according to the fifth aspect can perform the method according to the first aspect or the second aspect.

According to a sixth aspect, a communication apparatus is provided to implement the foregoing methods. The communication apparatus may be the network device in the second aspect or the fourth aspect, or an apparatus including the network device, or an apparatus included in the network device, for example, a chip. The communication apparatus includes a corresponding module, unit, or means (means) for implementing the method according to the second aspect or the fourth aspect. The module, unit, or means may be implemented by hardware or software, or implemented by hardware by executing corresponding software. The hardware or software includes one or more modules or units corresponding to the foregoing functions.

In some possible designs, the communication apparatus includes a processing module and a transceiver module. The processing module is configured to perform a processing function of the network device in the second aspect or the fourth aspect. The processing module is configured to perform a sending/receiving function of the network device in the second aspect or the fourth aspect.

In a possible design solution, the transceiver module may include a receiving module and a sending module. The sending module is configured to implement a sending function of the communication apparatus according to the sixth aspect, and the receiving module is configured to implement a receiving function of the communication apparatus according to the sixth aspect.

In a possible design solution, the communication apparatus according to the sixth aspect may further include a storage module, and the storage module stores a program or instructions. When the processing module executes the program or the instructions, the communication apparatus according to the sixth aspect can perform the method according to the second aspect or the fourth aspect.

According to a seventh aspect, a communication apparatus is provided (for example, the communication apparatus may be a chip or a chip system). The communication apparatus includes a processor, configured to implement a function in any one of the first aspect to the fourth aspect.

In a possible design solution, the communication apparatus may further include a memory, and the memory is configured to store necessary program instructions and data. The processor is coupled to the memory, and the processor is configured to execute a computer program or instructions stored in the memory, so that the communication apparatus performs the method according to any one of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the processor may be integrated with the memory.

In some possible designs, when the apparatus is the chip system, the apparatus may include a chip, or may include a chip and another discrete component.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, via a logic circuit or by executing code instructions, the method according to any one of the first aspect to the fourth aspect.

According to a ninth aspect, a communication apparatus is provided. The communication apparatus may be a terminal device, or may be a module or unit (for example, a chip, a chip system, or a circuit) that is in a one-to-one correspondence with and performs the method/operation/step/action described in the first aspect or the third aspect and that is in the terminal device, or may be used in conjunction with the terminal device. The communication apparatus may be a network device, or may be a module or unit (for example, a chip, a chip system, or a circuit) that is in a one-to-one correspondence with and performs the method/operation/step/action described in the second aspect or the fourth aspect and that is in the network device, or may be used in conjunction with the network device.

It may be understood that, when the communication apparatus provided in the seventh aspect or the ninth aspect is the chip, the sending action/function may be understood as an output, and the receiving action/function may be understood as an input.

According to a tenth aspect, a computer-readable storage medium is provided. The computer-readable storage medium stores a computer program or instructions. When the computer program or the instructions are run on a communication apparatus, the communication apparatus is enabled to perform the method according to any one of the first aspect to the fourth aspect.

According to an eleventh aspect, a computer program product including instructions is provided, including computer program code. When the computer program code is run on a communication apparatus, the communication apparatus is enabled to perform the method according to any one of the first aspect to the fourth aspect.

According to a twelfth aspect, a communication system is provided, including a communication apparatus configured to implement the method according to the first aspect and a communication apparatus configured to implement the method according to the second aspect.

According to a thirteenth aspect, a communication system is provided, including a communication apparatus configured to implement the method according to the third aspect and a communication apparatus configured to implement the method according to the fourth aspect.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of a structure of a communication apparatus according to an embodiment of this application; and
FIG. 4 is a diagram of a structure of another communication apparatus according to an embodiment of this application.

### DESCRIPTION OF EMBODIMENTS

Aspects, embodiments, or features are presented in embodiments of this application by describing a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may alternatively be used.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, a 5th generation (5th generation, 5G) mobile communication system like a new radio (new radio, NR) system, and a future communication system.

The following describes a communication system, an applicable network element, and related terms in embodiments of this application.

### 1. Non-terrestrial network (non-terrestrial network, NTN) communication

Non-terrestrial network communication has advantages such as wide coverage, long communication distance, high reliability, high flexibility, and high throughput, and is not affected by geographical environments, climatic conditions, and natural disasters. Therefore, the non-terrestrial network communication has been widely applied to fields such as aviation communication, maritime communication, and military communication. Introducing an NTN into a 5th generation (5th generation, 5G) mobile network can improve performance of a communication system. A satellite communication system and a high altitude platform station (high altitude platform station, HAPS) communication system are typical non-terrestrial network communication systems. In one aspect, a satellite network can provide a communication service for an area that is difficult to be covered by a terrestrial network, for example, an ocean, a forest, a desert, or a remote area. In another aspect, the satellite network can enhance reliability of 5G communication, for example, provide a more stable communication service for a user in a highspeed movement scenario, for example, a train or an airplane. In addition, the satellite network can further provide more data transmission resources, and support more connections.

Typically, a higher orbit of a satellite indicates a larger coverage area but a longer communication delay of the satellite. Based on orbital altitudes, satellites can be classified into the following types:
(1) low earth orbit (low earth orbit, LEO) with an orbital altitude of 160 to 2,000 kilometers (kilometer, km);
(2) medium earth orbit (medium earth orbit, MEO) with an orbital altitude of 2,000 km to 35,786 km; and
(3) geostationary earth orbit (geostationary earth orbit, GEO) with an orbital altitude of 35,786 km.

The GEO is a synchronous earth satellite orbit, and a satellite operating on this orbit is stationary relative to the ground. The LEO and the MEO are collectively referred to as non-geostationary orbits (non-geostationary orbit, NGSO), and satellites operating on such orbits move at high speeds relative to the ground.

For the NGSO, cells can be further classified into earth moving cells (Earth Moving Cell) and earth fixed cells (Earth Fixed Cell) based on whether a beam of a satellite moves with the satellite. For the earth moving cell, the cell moves relative to the ground, and a beam direction of the satellite moves with the satellite. For the earth fixed cell, the cell is fixed relative to the ground within a specific time, and a satellite antenna can use its beamforming capability to fixedly direct the beam to a specific area on the ground within the specific time.

Satellites may be generally classified into two types based on operating modes. A first type is a transparent (transparent) forwarding satellite. The satellite forwards cell information of a terrestrial network device (for example, a next generation NodeB (next generation NodeB, gNB)). The satellite performs radio frequency filtering, frequency conversion, and amplification. To be specific, the satellite mainly functions as a layer 1 relay (L1 relay) to regenerate a physical layer signal, and does not have another higher protocol layer. A second type is a regenerative (regenerative) satellite. The satellite has a processing function of a base station. In the regenerative operating mode, satellites may be further classified into: regenerative satellites without an inter-satellite link, that is, there is no inter-satellite link (inter-satellite link, ISL) between the satellites; and regenerative satellites with an inter-satellite link, that is, there is an interface between the satellites for directly exchanging data, where the inter-satellite link is an Xn interface. In another architecture, a satellite has only a processing function of a distributed unit (distributed unit, DU) of a base station, and in this scenario, the satellite functions as a DU.

### 2. Uplink time synchronization - TA adjustment

An important feature of uplink transmission is that uplink transmission of different terminal devices from a same cell does not interfere with each other. To ensure orthogonality of uplink transmission and avoid intra-cell (intra-cell) interference, a base station requires that signals from different terminal devices in a same subframe but on different frequency domain resources (different resource blocks (resource blocks, RBs)) basically arrive at the base station at aligned times. The base station can correctly decode uplink data as long as the uplink data sent by the terminal device is received within a cyclic prefix (cyclic prefix, CP) range. Therefore, uplink synchronization requires that the times at which the signals from the different terminal devices in the same subframe arrive at the base station fall within the cyclic prefix range.

To ensure time synchronization on a receiving side (base station side), an uplink timing advance (uplink timing advance) mechanism is introduced to LTE/NR. From the perspective of a terminal device side, a TA is essentially a negative offset (negative offset) between a start time of receiving a downlink subframe and a time of transmitting an uplink subframe. The base station can control, by properly controlling an offset of each terminal device, times at which uplink signals from different terminal devices arrive at the base station. For a terminal device that is far away from the base station, because of a large propagation delay, the terminal device needs to send uplink data earlier than a terminal device that is close to the base station.

In terrestrial network (terrestrial network, TN) communication, a base station sends a timing advance command (timing advance command, TAC) to a terminal device in the following two manners:
(1) In a random access process, the base station determines a TA by measuring a received preamble (preamble), and sends the TA to the terminal device by using a timing advance command field in a random access response (random access response, RAR). This process is an "initial uplink synchronization process".
(2) In a radio resource control (radio resource control, RRC) connected state (RRC_CONNECTED), the base station needs to maintain TA information. Although the terminal device and the base station achieve uplink time synchronization in the random access process, timing of arrival of an uplink signal at the base station may change with time. Therefore, the terminal device needs to continuously update an uplink timing advance of the terminal device, to maintain uplink time synchronization. In the LTE/NR, the base station determines a TA value of each terminal device based on measurement of uplink transmission of the corresponding terminal device. Theoretically, any signal sent by the terminal device, for example, a sounding reference signal (sounding reference signal, SRS), a demodulation reference signal (demodulation reference signal, DMRS), a channel quality indicator (channel quality indicator, CQI), an acknowledge (acknowledge, ACK), a negative acknowledgement (negative acknowledgement, NACK), or a downlink physical shared channel (physical uplink shared channel, PUSCH), may be used to measure the TA. If a specific terminal device needs to be corrected, the base station sends a TAC to the terminal device, and requires the terminal device to adjust uplink transmission timing. The TAC is sent to the terminal device by using a timing advance command media access control (media access control, MAC) control element (control element, CE) (Timing Advance Command MAC-CE).

It can be learned from the foregoing that, in terrestrial network communication, the TA is adjusted by using the TAC, and the terminal device does not need to perform timing advance when initiating a preamble. The TAC mechanism may be understood as a closed-loop TA adjustment mechanism.

Different from terrestrial network communication, a round trip delay (round trip delay, RTD) and a round trip delay difference of a terminal device in a same beam/cell in an NTN are far greater than a round trip delay and a round trip delay difference of a terminal device in a same cell in a terrestrial network. For example, when a diameter of a cell in a terrestrial cellular network is 350 kilometers (kilometer, km), a maximum round trip delay in the cell is 1.17 milliseconds (millisecond, ms). However, a round trip delay of a high-orbit satellite is up to hundreds of milliseconds, and a round trip delay of a low-orbit satellite is also up to tens of milliseconds. Therefore, it is inaccurate to determine a TA only by using a TAC, and the TA indicated by the TAC cannot cover such a large timing advance.

Therefore, in satellite communication, to implement uplink time synchronization, an additional open-loop mechanism needs to be introduced to estimate a TA. If the terminal device does not perform open-loop estimation, a time offset of the uplink signal received by the base station is very large, resulting in a decoding failure of the uplink signal. Specifically, if uplink signals of terminal devices are aligned on a satellite, the terminal device needs to calculate, based on ephemeris information and geographical location information of the terminal device, a round trip delay from the terminal device to the satellite (a service link), and uses the round trip delay as open-loop TA adjustment information during uplink signal sending, to perform timing advance. Certainly, a TAC is still useful, because both positioning information of the terminal device and the ephemeris information have an error. The TAC is used as closed-loop timing advance adjustment to compensate for an error of an open-loop TA. If uplink signals of terminal devices are aligned at a terrestrial station, or aligned at a reference point on a feeder link between a satellite and the terrestrial station, because the terminal device does not know a location of the terrestrial station or the reference point, a network needs to additionally indicate a round trip delay from the satellite to the reference point or the ground, which is usually referred to as a common TA (common TA or TA_common). In other words, the terminal device uses an RTD from the terminal device to the satellite and the common TA as an open-loop TA.

Currently, a TA adjustment amount in the NTN is determined according to the following formula (1): ${T}_{TA} = \left({N}_{TA}+{N}_{TA , UE - specific}+{N}_{TA , common}+{N}_{TA , offset}\right) \times {T}_{c}$ where
T_{TA} is the TA adjustment amount; and N_{TA} is a first timing advance, and N_{TA}=0 when the terminal device initiates a physical random access channel (physical random access channel, PRACH), and is updated based on a TAC carried by a MAC CE received in a message (message, msg)2/msgB;
N_{TA,UE-specific} is the round trip delay between the terminal device and the satellite, and is a timing advance determined by the terminal device based on GNSS information and the ephemeris information;
N_{TA,common} is the common TA, and is a timing advance (which may be obtained by calculating a parameter related to the common TA) associated with common TA information;
N_{TA,offset} is a specified timing offset, and is related to a communication mode (TDD/FDD) of the terminal device. For example, in a time division duplexing (time division duplexing, TDD) system, the parameter has a limited quantity of fixed values, and in a frequency division duplexing (frequency division duplexing, FDD) system, the parameter is 0.

T_{c} is a minimum time unit, and may be a fixed value predefined in a 3GPP technical specification (technical specification, TS) (for example, 0.509 nanoseconds (nanosecond, ns) in the 3GPP technical specification).

The two parameters, namely, the GNSS information and the ephemeris information, for determining N_{TA,UE-specific}, and the common TA are updated at the same time before either of the parameters is about to expire (the update herein does not include adjustment performed by the terminal device based on prediction).

After receiving the TAC, the terminal device determines N_{TA} by accumulating corresponding TAs, and determines the TA adjustment amount based on the determined N_{TA}. Each time the terminal device receives a TAC, the terminal device adds a previous TA. When TACs (T_{A}) is received in a MAC CE (in a connected state), N_{TA} is updated according to the following formula (2): ${N}_{TA_new} = {N}_{TA_old} + \left({T}_{A}-31\right) . \frac{16.64}{{2}^{μ}}$ where
N_{TA_new} is N_{TA} determined this time, N_{TA_old} is N_{TA} determined last time, T_{A} may be understood as a timing advance determined based on a TAC, and µ is a subcarrier spacing (subcarrier spacing, SCS) sequence number; and in NR, an SCS corresponding to the SCS sequence number µ is 2^{µ} · 15 kilohertz (kilohertz, kHz).

### 3. Uplink frequency synchronization

In an NTN, a terminal device obtains a downlink frequency offset F_{d} + Fₒ by detecting a downlink reference signal, where F_{d} is a Doppler frequency offset, F_{d} may be determined by the terminal device based on GNSS information and ephemeris information, and Fₒ is an oscillator frequency offset of the terminal device and a base station. The terminal device may obtain the oscillator frequency offset through calculation based on the obtained downlink frequency offset and the Doppler frequency offset. However, in terrestrial network communication, the base station is stationary, and a residual frequency offset generally does not exceed an error requirement. Therefore, closed-loop frequency offset correction does not need to be supported, and the base station does not need to perform frequency offset detection.

After calculating F_{d} and Fₒ, the terminal device may pre-compensate for a frequency offset introduced by Doppler and a crystal oscillator when sending an uplink signal. Therefore, the frequency offset on a base station side can be reduced, and the residual frequency offset is within a specific required range. If GNSS information is inaccurate or cannot be obtained, the terminal device cannot determine the oscillator frequency offset for pre-compensation. If the downlink frequency offset is directly used for pre-compensation, a twice oscillator frequency offset remains on the base station side. In addition, a terminal device with a large oscillator frequency offset cannot meet a residual frequency offset requirement after frequency offset compensation. For example, a center frequency F_{c} is equal to 3.5 GHz, the oscillator frequency offset Fₒ is equal to 0.2, the Doppler frequency offset F_{d} is equal to 0.8, a frequency of receiving a downlink signal by the terminal device is 3.5+0.6=4.1, and a deviation of 0.6 is detected. The terminal device performs compensation of 0.6 on the sent signal in a digital domain, and a frequency of actually sending a signal is 3.7-0.6=3.1. A frequency of receiving a signal by the base station is 3.1+0.8=3.9, which differs from the center frequency 3.5 by a frequency offset of 0.4, that is, a frequency offset value that is twice the oscillator frequency offset.

In embodiments of this application, the Doppler frequency offset may also be referred to as a Doppler frequency shift, a Doppler frequency shift value, a Doppler frequency offset value, or the like. This is not limited herein. It should be understood that the GNSS information in embodiments of this application is GNSS positioning information of the terminal device.

It can be learned from the foregoing that, in the NTN, when performing uplink time synchronization and/or uplink frequency synchronization, the terminal device needs to adjust a time offset and a frequency offset based on the GNSS information. However, regardless of time offset adjustment or frequency offset adjustment, the terminal device needs to obtain the GNSS information for implementation. The GNSS information is obtained by the terminal device by performing GNSS measurement. However, to maintain uplink synchronization, the terminal device needs to frequently perform GNSS measurement. Consequently, energy consumption of the terminal device increases.

Therefore, embodiments of this application provide a communication method, to reduce a quantity of GNSS measurements performed by a terminal device while ensuring uplink synchronization, thereby reducing energy consumption of the terminal device.

To better understand embodiments of this application, the following descriptions are provided before embodiments of this application are described.

First, in embodiments of this application, "indicate" may include "directly indicate" and "indirectly indicate". When a piece of "indication information" indicates A, the indication information may directly indicate A or indirectly indicate A, but it does not represent that the indication information definitely carries A.

Information indicated by indication information is referred to as to-be-indicated information. In a specific implementation process, there are a plurality of manners of indicating the to-be-indicated information, for example, but not limited to, a manner of directly indicating the to-be-indicated information, for example, the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting side device by sending configuration information to a receiving side device. The configuration information may include, for example, but is not limited to, one or a combination of at least two of RRC signaling, MAC layer signaling, and physical layer signaling. The MAC layer signaling includes, for example, a MAC-CE. The physical (physical, PHY) layer signaling includes, for example, downlink control information (downlink control information, DCI).

Second, in embodiments of this application, "first", "second", and various numerical numbers are merely for differentiation for ease of description, but are not intended to limit the scope of embodiments of this application, for example, for differentiation between different indication information. For another example, a first duration and a second duration are merely intended to distinguish between different time lengths, and do not limit a sequence of the first duration and the second duration. A person skilled in the art may understand that terms such as "first" and "second" do not limit a quantity and an execution sequence, and the terms such as "first" and "second" do not indicate a definite difference.

Third, in embodiments of this application, descriptions such as "when", "in a case", and "if" mean that a device (for example, a terminal device or an access network device) performs corresponding processing in an objective situation, and are not intended to limit time, and the device (for example, the terminal device or the access network device) is not required to perform a determining action during implementation; and do not mean any other limitation.

In addition, in embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a relative concept in a specific manner for ease of understanding.

Finally, network architectures and service scenarios that are described in embodiments of this application are intended to describe the technical solutions in embodiments of this application more clearly, and do not constitute any limitation on the technical solutions provided in embodiments of this application. A person of ordinary skill in the art may know that, as the network architectures evolve and new service scenarios emerge, the technical solutions provided in embodiments of this application are also applicable to similar technical problems.

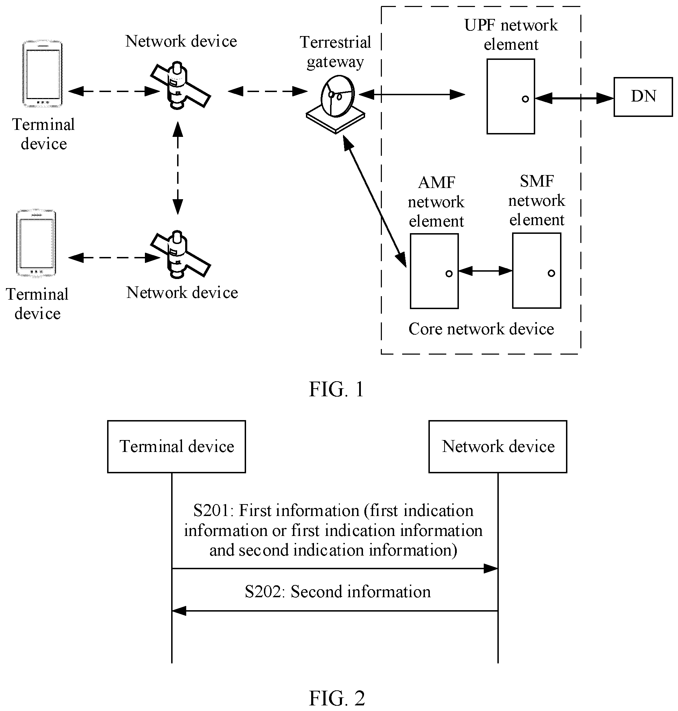

For ease of understanding embodiments of this application, a communication system shown in FIG. 1 is first used as an example to describe in detail a communication system to which embodiments of this application are applicable. For example, FIG. 1 is a diagram of an architecture of a communication system according to an embodiment of this application.

As shown in FIG. 1, the communication system includes a network device and a plurality of terminal devices that communicate with the network device. Optionally, the communication system may further include a core network device that communicates with the network device.

The core network device in this embodiment of this application is an apparatus that is deployed in a core network and that is configured to provide a service for a terminal device. In systems using different radio access technologies, core network devices having similar wireless communication functions may have different names. For example, when the communication method in embodiments of this application is applied to a 5G system, a core network device may be an access and mobility management function (access and mobility management function, AMF) network element, a session management function (session management function, SMF) network element, a user plane function (user plane function, UPF) network element, or the like. The UPF network element processes user plane data. The AMF network element and the SMF network element process control plane signaling. When a precoding method in embodiments of this application is applied to an LTE system, a core network device may be a mobility management entity (mobility management entity, MME). For ease of description only, in embodiments of this application, the foregoing apparatuses that can provide a service for the terminal device are collectively referred to as a core network device.

In embodiments of this application, the network device may also be referred to as an access network (radio access network, RAN) node, an access network device, a RAN entity, an access node, or the like, is located on a network side of the foregoing communication system, to help the terminal device implement wireless access, and is a device having a wireless sending/receiving function, or a chip or a chip system disposed in the device. The network device includes but is not limited to a base station (base station), an evolved NodeB (evolved NodeB, eNodeB), an access point (access point, AP), a transmission reception point (transmission reception point, TRP), a next generation NodeB (next generation NodeB, gNB), a base station in a future mobile communication system, an access node in a Wi-Fi system, or the like. The network device may be a macro base station, a micro base station, an indoor base station, a relay node, a donor node, a radio controller in an open radio access network (open radio access network, ORAN) scenario, or a radio controller in a centralized radio access network (centralized radio access network, CRAN) scenario. Optionally, the RAN node may alternatively be a server, a wearable device, a vehicle, a vehicle-mounted device, or the like. For example, an access network device in a V2X technology may be a road side unit (road side unit, RSU). All or a part of functions of the network device in this application may alternatively be implemented through a software function running on hardware, or implemented through a virtualized function instantiated on a platform (for example, a cloud platform). The network device in this application may alternatively be a logical node, a logical module, or software that can implement all or a part of functions of the network device.

In another possible scenario, a plurality of RAN nodes coordinate to assist the terminal device in implementing radio access, and different RAN nodes respectively implement a part of functions of a base station. For example, the RAN node may be a central unit (central unit, CU), a DU, a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, a CU may also be referred to as an O-CU (open CU), a DU may also be referred to as an O-DU, a CU-CP may also be referred to as an O-CU-CP, a CU-UP may also be referred to as an O-CU-UP, and an RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

As mentioned above, all or a part of functional modules of the network device may be deployed on an airborne platform or a satellite, or deployed on another form of communication device at a high altitude. Correspondingly, the network device may be the airborne platform, the satellite, or another similar device that connects the terminal device to the network device. The airborne platform may include at least one of the following: a satellite, an uncrewed aerial vehicle, or a hot air balloon.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in cooperation with the network device.

In embodiments of this application, the terminal device is a terminal that accesses the foregoing communication system and that has a wireless sending/receiving function, or a chip or a chip system disposed in the terminal. The terminal device may also be referred to as user equipment (user equipment, UE), a user apparatus, an access terminal, a subscriber unit, a subscriber station, a mobile station, a mobile console, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless sending/receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement the method in this application by using the vehicle-mounted module, the vehicle-mounted assembly, the vehicle-mounted component, the vehicle-mounted chip, or the vehicle-mounted unit that is built in the vehicle.

A device form of the terminal device is not limited in embodiments of this application. An apparatus configured to implement a function of the terminal device may be a terminal device, or may be an apparatus, for example, a chip system, that can support the terminal device in implementing the function. The apparatus may be mounted in the terminal device or used in cooperation with the terminal device. In embodiments of this application, the chip system may include a chip, or may include a chip and another discrete component.

In the system architecture shown in FIG. 1, the system further includes a terrestrial gateway and a data network (data network, DN). Herein, an interface for communication between the terminal device and the access network device may be an air interface (air interface) or a Uu interface. An interface for communication between the access network device and the terrestrial gateway may be an NG interface. An interface for communication between the terrestrial gateway and the core network device may be an NG interface. The core network device may be connected to only the terrestrial gateway. In this case, the access network device may be connected to the core network device through the terrestrial gateway. Details are shown in FIG. 1. The core network device may be connected to more than one terrestrial gateway. In this case, the access network device may be connected to the core network device through any one of the more than one terrestrial gateways (not shown in FIG. 1). The core network device (for example, the UPF network element) may communicate with an entity, a network element, or the like in the DN through an interface (for example, an N6 interface).

It should be noted that only manners of communication between some network elements are listed above, and other network elements may alternatively communicate with each other in some connection manners. Details are not described herein again in this embodiment of this application.

It should be noted that, the solutions in embodiments of this application may also be applied to another communication system, and a corresponding name may also be replaced with a name of a corresponding function in the another communication system.

The following specifically describes, with reference to FIG. 2, the communication method provided in embodiments of this application.

For example, FIG. 2 is a schematic flowchart of a communication method according to an embodiment of this application. The communication method is described by using communication between the network device and the terminal device shown in FIG. 1 as an example. Certainly, an action of the terminal device in the method may alternatively be performed by an apparatus/a module in the terminal device, for example, a chip, a processor, or a processing unit in the terminal device; and an action of the network device in the method may alternatively be performed by an apparatus/a module in the network device, for example, a chip, a processor, or a processing unit in the network device. This is not specifically limited in embodiments of this application.

As shown in FIG. 2, the communication method includes the following steps.

S201: The terminal device sends first information to the network device. Correspondingly, the network device receives the first information from the terminal device.

S202: The network device sends second information to the terminal device. Correspondingly, the terminal device receives the second information from the network device. The second information is determined based on the first information.

The following separately describes S201 and S202 in detail.

For S201:
The first information may be information indicating a time that is of an interval between two GNSS measurements for adjusting an oscillator frequency offset and that is determined by the terminal device. For example, the first information may include first indication information, the first indication information may indicate a time interval (referred to as a first time interval below) from performing first GNSS measurement by the terminal device to adjust the oscillator frequency offset to performing second GNSS measurement to adjust the oscillator frequency offset. The first GNSS measurement and the second GNSS measurement are two consecutive GNSS measurements. The second GNSS measurement may be considered as a GNSS measurement after the first GNSS measurement. The first time interval is the time of the interval between the two GNSS measurements for adjusting the oscillator frequency offset. It should be understood that, in this embodiment of this application, the first GNSS measurement may be a 1^{st} GNSS measurement, or may be a non-1^{st} GNSS measurement. This is not limited herein.

Adjusting the oscillator frequency offset mainly means that the terminal device obtains a Doppler frequency offset through calculation based on a downlink frequency offset obtained through measurement, GNSS information obtained through one GNSS measurement, and ephemeris information, to update or determine the oscillator frequency offset, and performs crystal oscillator compensation based on the oscillator frequency offset, so that an oscillator frequency offset obtained through the compensation does not exceed an error requirement. The downlink frequency offset is obtained by the terminal device by measuring a downlink reference signal, for example, a downlink reference signal DMRS, a channel state information-reference signal (channel state information-reference signal, CSI-RS), or a positioning reference signal (positioning reference signal, PRS). The downlink frequency offset includes two parts: a Doppler frequency offset and an oscillator frequency offset. The GNSS information is GNSS positioning information of the terminal device. The ephemeris information may include one or more of a semi-major axis, an eccentricity, an orbit inclination, a right ascension of the ascending node, an argument of perigee, a mean anomaly, and a reference time of a satellite. This is not limited herein.

In this embodiment of this application, the terminal device may calculate the first time interval based on one or more of an error requirement of the oscillator frequency offset, a hardware capability of a crystal oscillator, and performance (for example, positioning accuracy) of a GNSS module in the terminal device. For example, after the terminal device performs the first GNSS measurement to adjust the oscillator frequency offset at a moment T₁, if the first time interval calculated based on the error requirement of the oscillator frequency offset, the hardware capability of the crystal oscillator, and the GNSS positioning accuracy of the terminal device is ΔT₁, the terminal device considers that the second GNSS measurement needs to be performed at a moment T_{2,*f*} = T₁ + Δ*T*₁ to adjust the oscillator frequency offset again.

In this embodiment of this application, the first time interval indicated by the first indication information may be interpreted in the following possible manners:
Possible interpretation 1: It may be understood that the terminal device determines how long an oscillator frequency offset, after being adjusted once based on GNSS measurement (for example, the first GNSS measurement) can be maintained or stabilized within a required error range. If the duration expires, the adjusted oscillator frequency offset exceeds the required error range, such that a next GNSS measurement (for example, the second GNSS measurement) needs to be performed to re-adjust the oscillator frequency offset. In this case, the first time interval may also be referred to as a stable duration of the crystal oscillator obtained by adjusting the oscillator frequency offset by performing one GNSS measurement.
Possible interpretation 2: It may be understood that the terminal device determines a valid duration of the oscillator frequency offset calculated based on one GNSS measurement (for example, the first GNSS measurement). Within the valid duration, the terminal device considers that the oscillator frequency offset remains unchanged. When sending uplink signals within the valid duration, the terminal device performs crystal oscillator compensation by using the oscillator frequency offset calculated from the first GNSS measurement, to maintain uplink frequency synchronization. When the valid duration expires, the terminal device needs to perform a next GNSS measurement (for example, the second GNSS measurement) to re-calculate the oscillator frequency offset. In this case, the first time interval may also be referred to as a valid duration of the oscillator frequency offset calculated from one GNSS measurement.

In other words, it may be considered that the first indication information indicates a capability of keeping the crystal oscillator stable after the terminal device performs one oscillator frequency offset adjustment. Within the first time interval indicated by the first indication information, the terminal device may consider that the terminal device does not need to perform GNSS measurement to calculate the Doppler frequency offset for uplink frequency synchronization, but performs uplink frequency synchronization based on the Doppler frequency offset determined based on the measured downlink frequency offset and the oscillator frequency offset calculated from the first GNSS measurement. It may be considered that the terminal device knows the downlink frequency offset and the oscillator frequency offset within the first time interval, and calculates the Doppler frequency offset, to implement uplink frequency synchronization.

In a possible case, the first time interval, namely, the stable duration of the crystal oscillator or the valid duration of the oscillator frequency offset is affected by environmental changes, for example, temperature. If the crystal oscillator is located in an environment with a high temperature, the first time interval may be shortened. Conversely, the first time interval may be prolonged. In this case, the terminal device updates the first time interval based on impact of the environmental changes on the first time interval, and re-reports the updated first time interval to the network device, so that the network device adjusts a first duration in a timely manner. For a specific description of the first duration, refer to a related description in the following S202. Details are not described herein.

Optionally, the first information may alternatively be information indicating two GNSS measurements that are for adjusting a timing advance and that are determined by the terminal device. For example, the first information may further include second indication information. In other words, the first information may include the first indication information and the second indication information. The second indication information may indicate a time interval (referred to as a second time interval below) from performing the first GNSS measurement by the terminal device to adjust the timing advance to performing the second GNSS measurement to adjust the timing advance. In this design solution, the first GNSS measurement and the second GNSS measurement may be used to adjust the oscillator frequency offset (frequency offset) and the timing advance (time offset), and the second time interval is time that is of the interval between the two GNSS measurements for adjusting the timing advance and that is determined by the terminal device.

Adjusting the timing advance mainly means that the terminal device determines, re-determines, or updates a TA adjustment amount (for example, T_{TA} described in the foregoing related technology description 2) based on a timing advance (for example, N_{TA,UE-specific} described in the foregoing related technology description 2) calculated based on GNSS information obtained through one GNSS measurement (for example, the first GNSS measurement) and the ephemeris information. It may be considered that other timing advances for determining the TA adjustment amount remain unchanged.

In this embodiment of this application, the terminal device may obtain the second time interval through calculation based on one or more of a relative moving speed of the terminal device relative to the network device (for example, a satellite), a relative location of the terminal device relative to the network device, the GNSS positioning precision, and an error requirement of the timing advance.

For example, after the terminal device performs the first GNSS measurement to adjust the timing advance at the moment T₁, if the second time interval calculated based on the relative moving speed of the terminal device relative to the network device, the GNSS positioning precision, and the error requirement of the timing advance is Δ*T*₂, the terminal device considers that the second GNSS measurement needs to be performed at a moment T_{2,*t*} = T₁ + Δ*T*₂ to adjust the timing advance again. In this case, it may be understood as that, after the terminal device performs the first GNSS measurement to adjust the oscillator frequency offset and the timing advance at the moment T₁, a moment at which the second GNSS measurement is performed to adjust the oscillator frequency offset is calculated as T_{2,*f*}, and a moment at which the second GNSS measurement is performed to adjust the timing advance is calculated as T_{2,*t*}.

In other words, in this embodiment of this application, the first GNSS measurement for adjusting the timing advance and the first GNSS measurement for adjusting the oscillator frequency offset are a same GNSS measurement. However, after the first GNSS measurement for adjustment, an execution time to the second GNSS measurement for adjusting the oscillator frequency offset next time and an execution time to the second GNSS measurement for adjusting the timing advance next time that are determined by the terminal device may be different. In other words, the second time interval may be the same as or different from the first time interval.

Similar to the first time interval, the second time interval indicated by the second indication information may be understood as a valid duration that is of the timing advance calculated by performing one GNSS measurement (for example, the first GNSS measurement) and that is determined by the terminal device. Within the valid duration, the terminal device considers that the timing advance remains unchanged. When sending an uplink signal within the valid duration, the terminal device performs time offset compensation by using the timing advance calculated by performing the first GNSS measurement, to maintain uplink time synchronization. When the valid duration expires, the terminal device needs to perform a next GNSS measurement (for example, the second GNSS measurement) to obtain a timing advance through recalculation. In this case, the second time interval may also be referred to as the valid duration of the timing advance calculated by performing one GNSS measurement.

Within the second time interval, the terminal device may consider that GNSS measurement does not need to be performed to obtain the timing advance through calculation for uplink time offset synchronization, but the timing advance obtained through adjustment based on the first GNSS measurement is used for uplink time synchronization. Therefore, after performing the first GNSS measurement to obtain the first time interval and the second time interval through calculation, the terminal device may separately send the first time interval and the second time interval to the network device by using the first indication information and the second indication information that are included in the first information.

In a possible implementation, the first indication information and the second indication information may be separately sent. For example, the first indication information and the second indication information are sent in different messages.

In a possible implementation, the first information may be sent in an RRC setup request (RRC setup request) message or an RRC connection setup complete (RRC connection setup complete) message. The RRC setup request message may also be referred to as a message (message, Msg) 3, and the RRC connection setup complete message may also be referred to as a Msg5. In addition, the first information may alternatively be sent in signaling like a MAC CE. This is not limited herein.

In a possible implementation, the terminal device may actively report the first information after performing one GNSS measurement. In addition, in a possible implementation, the terminal device may alternatively report the first information based on a trigger of the network device. This is not limited herein. For example, the network device sends third indication information to the terminal device. Correspondingly, the terminal device receives the third indication information from the network device. The third indication information indicates the terminal device to report the first information each time after the terminal device completes one GNSS measurement.

For S202:
The second information may be information indicating a maximum time interval after which the terminal device is expected to perform GNSS measurement. The second information may be information determined (or generated/obtained) based on the first information. For example, the network device determines the second information based on the first information. Indication manners of the second information are correspondingly different according to different indication information carried in the first information. Specifically, the following cases are included.

Case 1: When the first information includes the first indication information, the second information indicates that the terminal device is expected not to perform GNSS measurement within a first duration to adjust the oscillator frequency offset, and the first duration is determined based on the first indication information. In other words, after obtaining the first information, the network device may determine the first duration based on the first indication information in the first information, where the first duration is a duration within which the terminal device is expected not to perform GNSS measurement to adjust the oscillator frequency offset.

For example, the network device may set the first duration to the first time interval, or may set the first duration to be shorter than the first time interval. This is equivalent to triggering, in advance, the terminal device to perform GNSS measurement to adjust the oscillator frequency offset. In this case, the first duration may be set by considering a time required for the terminal device to perform one GNSS measurement and a time required for obtaining the oscillator frequency offset through calculation based on the GNSS information. This is not limited herein. In this case, the first duration may be represented as ΔTₐ, where 0 < Tₐ ≤ Δ*T*₁.

In this case, when the network device configures the first duration for the terminal device in a form of the second information, the network device may also locally configure the first duration, and trigger the first duration synchronously with the terminal device, so that frequency offset detection is not performed on an uplink signal within the first duration. The uplink signal includes an uplink data signal and an uplink reference signal. The uplink data signal is, for example, an orthogonal frequency division multiplexing (orthogonal frequency division multiplexing, OFDM) signal, and the uplink reference signal is, for example, an SRS.

Case 2: When the first information includes the first indication information and the second indication information, there are the following two design solutions.

In a possible design solution 1, the second information may further indicate that the terminal device is expected not to perform GNSS measurement within the first duration to adjust the timing advance, that is, the second information indicates that the terminal device is expected not to perform GNSS measurement within the first duration to adjust the oscillator frequency offset and the timing advance. In this design solution 1, the first duration may be a smaller value in the valid duration of the oscillator frequency offset and the valid duration of the timing advance, the valid duration of the oscillator frequency offset is determined based on the first indication information, and the valid duration of the timing advance is determined based on the second indication information.

In other words, the network device determines the valid duration of the oscillator frequency offset based on the first time interval indicated by the first indication information in the first information, and determines the valid duration of the timing advance based on the second time interval indicated by the second indication information. The smaller value in the valid duration of the oscillator frequency offset and the valid duration of the timing advance may be used as the first duration. In this case, the first duration is a duration within which the terminal device is expected not to perform GNSS measurement to adjust the oscillator frequency offset and the timing advance.

For example, the valid duration of the oscillator frequency offset may be equal to the first time interval, or may be shorter than the first time interval. The network device may consider a time required for the terminal device to perform one GNSS measurement and a time required for obtaining the oscillator frequency offset through calculation based on the GNSS information. This is not limited herein. Similarly, the valid duration of the timing advance may be equal to the second time interval, or may be shorter than the second time interval. The network device considers a time required for the terminal device to perform one GNSS measurement and a time required for obtaining the timing advance through calculation based on the GNSS information. This is not limited herein. In this case, the first duration may be represented as ΔTₐ, where 0 < ΔTₐ ≤ mn{Δ*T*₁,Δ*T*₂}.

In this case, when the network device configures the first duration for the terminal device in a form of the second information, the network device locally configures the first duration, and may not perform frequency offset detection and time offset detection on an uplink signal within the first duration. In a possible implementation, the network device may send the second information in signaling like an RRC message or a MAC CE to the terminal device. This is not limited herein.

In this embodiment of this application, that the network device performs frequency offset detection on the uplink signal may mean that the network device compares a frequency obtained by performing frequency detection on the uplink signal with an expected frequency, and a difference obtained through the comparison may be used as an adjustment amount for adjusting the oscillator frequency offset by the terminal device. That the network device performs time offset detection on the uplink signal may mean that the network device compares an arrival time of the uplink signal with an expected arrival time, and a difference obtained through the comparison may be used as an adjustment amount for adjusting the timing advance by the terminal device.

For Case 1 and the design solution 1 in Case 2, in this embodiment of this application, the first duration may be configured by the network device in a manner of a timer, and may include local configuration and configuration for the terminal device. Triggering of the first duration may be triggered according to a preset rule. The preset rule may be preconfigured or agreed on in a protocol, or may be determined through negotiation between the network device and the terminal device. This is not limited herein. Therefore, after the network device indicates the first duration to the terminal device in a form of the second information, the terminal device may trigger, based on the second information, execution or non-execution of GNSS measurement.

In this embodiment of this application, after receiving the second information, the terminal device may trigger the first duration, and not perform GNSS measurement within the first duration. Correspondingly, after sending the second information, the network device may synchronously trigger the first duration with the terminal device, and not perform frequency offset detection or frequency offset and time offset detection on the uplink signal within the first duration. In a possible implementation, within a first time period having a duration equal to the first duration, the terminal device may determine not to perform GNSS measurement. Correspondingly, within the first time period having a duration equal to the first duration, when the first information includes the first indication information, the network device may determine not to perform frequency offset detection on the uplink signal; or when the first information includes the first indication information and the second indication information, the network device may determine not to perform frequency offset and time offset detection on the uplink signal. For the terminal device, a start time of the first time period is a moment at which the second information is received plus a first preset duration; and for the network device, a start time of the first time period is a moment at which the second information is sent plus a second preset duration.

The first preset duration may be preconfigured or agreed on in a protocol, or may be determined through negotiation between the network device and the terminal device. This is not limited herein. The first preset duration may be represented as T_{Δ1}. In addition, the first preset duration may be set by considering a computing capability of the terminal device, an environmental change, a communication bandwidth, a propagation delay, and the like. This is not limited herein. In some possible cases, a value of the first preset duration may be 0, that is, the terminal device triggers the first duration when receiving the second information, and the start time of the first time period is the moment at which the second information is received.

In other words, the terminal device triggers the first duration after the first preset duration starting from the moment at which the second information is received, and determines not to perform GNSS measurement within the first duration. The start time of the first time period is the moment at which the first duration is triggered. For example, if the terminal device receives the second information at a moment T₃, the terminal device determines not to perform GNSS measurement from a moment T₄ + T_{Δ1} to a moment T₄ + T_{Δ1} + ΔTₐ. In other words, the first time period is from T₄ + T_{Δ1} to T₄ + T_{Δ1} + ΔTₐ, and is denoted as Timer1-ue. In this case, it may be considered that the terminal device triggers a timer Timer1-ue whose timing duration is the first duration.

Similar to the first preset duration, the second preset duration may be preconfigured or agreed on in a protocol, or may be determined through negotiation between the network device and the terminal device. This is not limited herein. The second preset duration may be represented as T_{Δ2}. In addition, the second preset duration may also be set by considering a computing capability of the terminal device, an environmental change, a communication bandwidth, a propagation delay, and the like. This is not limited herein. In some possible cases, a value of the second preset duration may be 0, that is, the network device triggers the first duration when sending the second information, and the start time of the fifth time period is the moment at which the second information is sent.

In other words, the network device may synchronously trigger the first duration with the terminal device after the second preset duration starting from the moment at which the second information is sent. Because the terminal device does not need to adjust a frequency offset or a frequency offset and a time offset within the first duration, the network device may also not perform frequency offset detection or frequency offset and time offset detection on the uplink signal within the first duration, and does not need to indicate frequency offset adjustment information or frequency offset and time offset adjustment information to the terminal device.

In addition, within the first time period, when the first information includes the first indication information, when sending an uplink signal, the terminal device may perform uplink frequency synchronization by using the Doppler frequency offset obtained based on the measured downlink frequency offset and the oscillator frequency offset determined through calculation by performing the first GNSS measurement. When the first information includes the first indication information and the second indication information, when sending an uplink signal, the terminal device may perform uplink frequency synchronization by using the Doppler frequency offset obtained based on the measured downlink frequency offset and the oscillator frequency offset determined through calculation by performing the first GNSS measurement, and perform uplink time synchronization by using the timing advance obtained through adjustment by performing the first GNSS measurement.

It should be understood that, in this embodiment of this application, the first preset duration and the second preset duration may be set to ensure that a time for triggering a timer on a network device side and a time for triggering a timer on a terminal device side are aligned. In this case, the first preset duration may be different from the second preset duration. Therefore, for the network device and the terminal device, calculation of the start time of the first time period on the two sides may be different.

In some possible scenarios, the network device and the terminal device may align time in a frame alignment manner. A delay between sending information by the network device and receiving the information by the terminal device may be ignored. The first preset duration may be the same as the second preset duration. In this case, times for triggering the timers on the two sides may still be aligned. In other words, in this embodiment of this application, if the start time and an end time of the first time period on the network device side are aligned with the start time and an end time of the time period on the terminal device side, a second time period, a third time period, and a fourth time period on the network side are also aligned with a second time period, a third time period, and a fourth time period on the terminal device side respectively.

After the terminal device triggers not to perform GNSS measurement to adjust the oscillator frequency offset or the oscillator frequency offset and the timing advance within the first time period having a duration equal to the first duration, in a possible scenario 1, the terminal device may adjust the oscillator frequency offset or the oscillator frequency offset and the timing advance again based on a trigger of the network device.

In this scenario 1, in a possible design 1, the network device may send frequency offset adjustment information to the terminal device, to indicate the terminal device to re-adjust the oscillator frequency offset, or the network device may send frequency offset and time offset adjustment information to the terminal device, to indicate the terminal device to re-adjust the oscillator frequency offset or the oscillator frequency offset and the timing advance without performing GNSS measurement.

In this design 1, in a possible implementation 1, before the first time period ends, the network device may perform frequency offset detection or frequency offset and time offset detection on the uplink signal in advance, and send frequency offset adjustment information or frequency offset and time offset adjustment information to the terminal device, so that the terminal device can trigger adjustment of the oscillator frequency offset or the oscillator frequency offset and the timing advance in advance before the first time period ends, without performing GNSS measurement.

For example, the network device may send third information within the first time period. Correspondingly, the terminal device may receive the third information within the first time period. When the first information includes the first indication information, the third information indicates the terminal device to adjust the oscillator frequency offset, and the third information includes an adjustment parameter of the oscillator frequency offset. When the first information includes the first indication information and the second indication information, the third information indicates the terminal device to adjust the oscillator frequency offset and the timing advance, and the third information includes an adjustment parameter of the oscillator frequency offset and an adjustment parameter of the timing advance. In this embodiment of this application, the adjustment parameter of the oscillator frequency offset may be obtained by the network device by performing frequency offset detection on the uplink signal within the first time period, and the adjustment parameter of the timing advance may be obtained by the network device by performing time offset detection on the uplink signal within the first time period.

In other words, the network device may trigger, in advance, the timer (namely, the first time period) that is started locally and whose duration is the first duration to end, to perform frequency offset detection or frequency offset and time offset detection on the uplink signal, to obtain the adjustment parameter of the oscillator frequency offset or the adjustment parameter of the oscillator frequency offset and the adjustment parameter of the timing advance, and indicate the parameter to the terminal device in a form of the third information, so as to trigger, in advance, the timer that is started by the terminal device and whose duration is the first duration to end, so that the terminal device can adjust the oscillator frequency offset or adjust the oscillator frequency offset and the timing advance before the timer ends, without performing GNSS measurement for adjustment.

Further, because after the adjustment in the implementation 1, the crystal oscillator is in a stable state, and the timing advance is also in a stable state, the network device and the terminal device may synchronously trigger the first duration again. For example, the network device may trigger the first duration again after sending the third information, and the terminal device may trigger the first duration again after receiving the third information. After triggering the first duration again, for actions performed by the network device and the terminal device, refer to the foregoing process. Details are not described herein again.

In a possible implementation 2, after the first time period ends, the network device may send frequency offset adjustment information to the terminal device, to indicate the terminal device to re-adjust the oscillator frequency offset, or the network device may send frequency offset and time offset adjustment information to the terminal device, to indicate the terminal device to re-adjust the oscillator frequency offset or the oscillator frequency offset and the timing advance without performing GNSS measurement.

For example, the network device may send third information to the terminal device within a second preset duration starting from an end of the first time period. Correspondingly, the terminal device may receive the third information from the network device within a first preset duration starting from the end of the first time period. For specific descriptions of the first preset duration and the second preset duration, refer to the foregoing descriptions. For a specific description of the third information, refer to the related description in the foregoing implementation 1. Details are not described herein again.

In other words, the network device performs frequency offset detection or frequency offset and time offset detection on the uplink signal within the second preset duration that uses an end moment of the first time period as a start moment, to obtain an adjustment parameter of the oscillator frequency offset or an adjustment parameter of the oscillator frequency offset and an adjustment parameter of the timing advance, and indicates the parameter to the terminal device in a form of the third information. Correspondingly, the terminal device starts to wait for receiving the third information at the end moment of the first time period, receives the third information within the first preset duration that uses the end moment of the first time period as a start moment, and adjusts the oscillator frequency offset or the oscillator frequency offset and the timing advance again based on the adjustment parameter indicated by the third information, without performing GNSS measurement for adjustment. After the adjustment, the crystal oscillator is in a stable state, and the timing advance is also in a stable state.

Further, the network device and the terminal device may synchronously trigger the first duration again. To be specific, the terminal device does not perform GNSS measurement within the first duration that is triggered again. Correspondingly, the network device determines, within the first duration that is triggered again, not to perform frequency offset detection or frequency offset and time offset detection on the uplink signal. In other words, the network device does not need to send the frequency offset adjustment information or the frequency offset and time offset adjustment information to the terminal device.

For example, within a second time period having a duration equal to the first duration, the network device determines not to perform frequency offset detection or frequency offset and time offset detection on an uplink signal. Correspondingly, within a second time period having a duration equal to the first duration, the terminal device determines not to perform GNSS measurement. For the network device, a start moment of the second time period is a moment at which the third information is sent plus the second preset duration; and for the terminal device, a start moment of the second time period is a moment at which the third information is received plus the first preset duration.

For example, if the network device sends the third information at a moment T₅, the network device determines not to perform frequency offset detection or frequency offset and time offset detection on the uplink signal from a moment T₅ + T_{Δ2} to a moment T₅ + T_{Δ2} + ΔTₐ. In other words, the second time period is from T₅ + T_{Δ2} to T₅ + T_{Δ2} + ΔTₐ, and is denoted as Timer2-ran. In this case, it may be considered that the network device triggers a timer Timer2-ran whose timing duration is the first duration.

Correspondingly, if the terminal device receives the third information at a moment T₆, the terminal device determines not to perform GNSS measurement from a moment T₆ + T_{Δ1} to a moment T₆ + T_{Δ1} + ΔTₐ. In other words, the second time period is from T₆ + T_{Δ1} to T₆ + T_{Δ1} + ΔTₐ, and is denoted as Timer2-ue. In this case, it may be considered that the terminal device triggers a timer Timer2-ue whose timing duration is the first duration.

In a possible design 2, the network device may not send frequency offset adjustment information or frequency offset and time offset adjustment information to trigger the terminal device to perform adjustment, and the network device may trigger the terminal device to perform GNSS measurement, to adjust the oscillator frequency offset or the oscillator frequency offset and the timing advance. Similar to the foregoing design 2, the network device may trigger within the first time period, that is, trigger in advance, or may trigger after the first time period. Different from the foregoing design 2, third information in the design 2 indicates the terminal device to perform GNSS measurement. Details are not described herein again.

After the terminal device triggers not to perform GNSS measurement to adjust the oscillator frequency offset or the oscillator frequency offset and the timing advance within the first time period having a duration equal to the first duration, in a possible scenario 2, the terminal device may actively trigger to perform GNSS measurement to adjust the oscillator frequency offset or the oscillator frequency offset and the timing advance again.

In this scenario 2, in a possible design 1, the terminal device may determine, at an end moment of the first time period, to perform GNSS measurement. In other words, the terminal device triggers, by default when the timer ends, to perform GNSS measurement to adjust the oscillator frequency offset or the oscillator frequency offset and the timing advance.

In this design 1, the following case exists: The network device does not send the third information within the first time period, and therefore the terminal device fails to receive the third information. In this case, the network device may consider by default that the terminal device performs GNSS measurement at the end moment of the first time period. Alternatively, the network device sends the third information within the first time period, but the terminal device fails to receive the third information. Therefore, the terminal device may actively trigger to perform GNSS measurement at the end moment of the first time period. In other words, in some possible cases, this may be replaced with: The terminal device fails to receive the third information within the first time period, so that the terminal device may determine to perform GNSS measurement at the end moment of the first time period.

Optionally, after performing GNSS measurement, the terminal device may notify the network device of indication information, so that the network device may trigger the first duration again based on the indication information.

After the terminal device performs GNSS measurement at the end moment of the first time period to adjust the oscillator frequency offset or adjust the oscillator frequency offset and the timing advance, after the adjustment, the crystal oscillator is in a stable state, and the timing advance is also in a stable state. Further, the terminal device may trigger the first duration again, and not perform GNSS measurement within the first duration that is triggered again, perform GNSS measurement until the first duration that is triggered again ends. In other words, the terminal device may repeatedly trigger the timer continuously with reference to the foregoing process.

In a possible design 2, if the terminal device fails to receive the third information within a third time period, the terminal device may determine, at an end moment of the third time period, to perform GNSS measurement. The third time period is the first time period plus the first preset duration. In other words, the terminal device fails to receive the third information from the network device from a start of the first time period to an end of the first time period, and the terminal device may wait for a period of time after the first time period ends, to determine whether the third information from the network device can be received. If the third information still fails to be received after the terminal device waits for the period of time, the terminal device may determine to perform GNSS measurement. After the adjustment, the terminal device may trigger the first duration again. For example, a triggering moment is a moment at which adjustment of the oscillator frequency offset is completed, or adjustment of the oscillator frequency offset and the timing advance is completed. This is not limited herein.

In this design 2, the following case still exists: The network device does not send the third information within the third time period, and therefore the terminal device fails to receive the third information. In this case, the network device considers by default that the terminal device performs GNSS measurement at the end moment of the third time period, or the terminal device notifies the network device that the terminal device has performed GNSS measurement at the end moment of the third time period, so that the network device can trigger the first duration again. Alternatively, the network device sends the third information within the third time period, but the terminal device fails to receive the third information. In this case, the terminal device may also notify the network device that the terminal device has performed GNSS measurement at the end moment of the third time period, so that the network device can trigger the first duration again.

The foregoing two scenarios describe a process of how the terminal device adjusts the oscillator frequency offset or the oscillator frequency offset and the timing advance again after receiving the second information and starting the first duration. In a possible scenario 3, after starting the first duration based on the second information, the terminal device may have performed GNSS measurement within the first duration instead of not performing GNSS measurement within the first duration as expected by the network device. It may be considered that the first duration ends in advance. In this case, the terminal device needs to notify the network device that the terminal device has performed GNSS measurement within the first duration, and restarts or re-triggers the first duration.

For example, if the terminal device has performed GNSS measurement within the first time period, the terminal device may send fourth information to the network device. Correspondingly, the network device receives the fourth information from the terminal device within the first time period. The fourth information indicates that the terminal device has performed GNSS measurement within the first time period. In other words, if the terminal device has performed GNSS measurement within the first time period, the terminal device needs to notify the network device.

In a possible implementation, the fourth information may directly indicate, by using one bit, whether the terminal device has performed GNSS measurement within the first time period. For example, a value 0 represents that the terminal device has not performed GNSS measurement within the first time period, and a value 1 represents that the terminal device has performed GNSS measurement within the first time period.

In another possible implementation, the fourth information may indirectly indicate that the terminal device has performed GNSS measurement within the first time period. For example, the fourth information specifically indicates a remaining time before the terminal device performs the second GNSS measurement. In other words, the fourth information indicates the remaining time to a next GNSS measurement. If the terminal device does not perform GNSS measurement within the first time period, the remaining time is equal to the second time interval. If the terminal device has performed GNSS measurement within the first time period, the remaining time is less than the second time interval. Therefore, the network device compares the remaining time indicated by the fourth information with the second time interval, to determine whether the terminal device has performed GNSS measurement within the first time period.

Further, after having performed GNSS measurement within the first time period, the terminal device needs to re-trigger the first duration. Correspondingly, after receiving the fourth information, the network device also needs to re-trigger the first duration. In a possible implementation, within a fourth time period having a duration equal to the first duration, the terminal device determines not to perform GNSS measurement, and the network device determines not to detect the uplink signal. Similarly, for the terminal device, a start time of the fourth time period is a moment at which the fourth information is sent plus the first preset duration; and for the network device, a start time of the fourth time period is a moment at which the fourth information is received plus the second preset duration.

For Case 2, in a possible design solution 2, the second information may further indicate that the terminal device is expected not to perform GNSS measurement within a second duration to adjust the timing advance, that is, the second information indicates that the terminal device is expected not to perform GNSS measurement within a first duration to adjust the oscillator frequency offset, and indicates that the terminal device is expected not to perform GNSS measurement within the second duration to adjust the timing advance. The first duration is determined based on the first indication information, and the second duration is determined based on the second indication information. In other words, the network device configures two durations, namely, the first duration and the second duration, for the terminal device. For the first duration, refer to the foregoing related description of the valid duration of the oscillator frequency offset. For the second duration, refer to the foregoing valid duration of the timing advance. Details are not described herein again. In this embodiment of this application, the network device may configure two durations by using timers. For example, a timer 1 corresponds to the first duration, and a timer 2 corresponds to the second duration. It should be understood that, in this embodiment of this application, the first duration and the second duration have a same triggering moment.

After receiving the second information, the terminal device may trigger the first duration and the second duration, and not perform GNSS measurement to adjust the oscillator frequency offset within the first duration, and not perform GNSS measurement to adjust the timing advance within the second duration. Correspondingly, after sending the second information, the network device may not perform frequency offset detection on the uplink signal within the first duration, and not perform time offset detection on the uplink signal within the second duration. For the terminal device, a start time of the first time period and a start time of the second time period are a moment at which the second information is sent plus a second preset duration; and for the network device, a start time of the first time period and a start time of the second time period are a moment at which the second information is received plus a first preset duration. In addition, for related descriptions of the first preset duration and the second preset duration, refer to the related descriptions in Case 1 and the design solution 1 in Case 2. Details are not described herein again.

In other words, for the network device, the triggering moment of the first duration and the triggering moment of the second duration are the moment at which the second information is sent plus the second preset duration. Within the first time period, the network device does not need to detect a frequency offset to indicate the terminal device to adjust the oscillator frequency offset, and within the second time period, the network device does not need to detect a time offset to indicate the terminal device to adjust the timing advance, thereby reducing complexity of receiving an uplink signal by the network. For the terminal device, the triggering moment of the first duration and the triggering moment of the second duration are the moment at which the second information is received plus the first preset duration. GNSS measurement does not need to be performed within the first time period and the second time period, thereby reducing GNSS measurement and reducing energy consumption.

Within the first time period, when sending an uplink signal, the terminal device may perform uplink frequency synchronization by using the Doppler frequency offset obtained based on the measured downlink frequency offset and the oscillator frequency offset determined through calculation by performing the first GNSS measurement; and within the second time period, when sending an uplink signal, the terminal device may perform uplink time synchronization by using the timing advance obtained through adjustment by performing the first GNSS measurement. It should be understood that, in a time period in which the first time period overlaps the second time period, when sending an uplink signal, the terminal device may perform uplink frequency synchronization by using the Doppler frequency offset obtained based on the measured downlink frequency offset and the oscillator frequency offset determined through calculation by performing the first GNSS measurement, and perform uplink time synchronization by using the timing advance obtained through adjustment by performing the first GNSS measurement, namely, uplink time-frequency synchronization.

After the terminal device triggers not to perform GNSS measurement to adjust the oscillator frequency offset within the first time period having a duration equal to the first duration, and triggers not to perform GNSS measurement to adjust the timing advance within the second time period having a duration equal to the second duration, the three scenarios described in Case 1 and the design solution 1 in Case 2 still exist. However, in the design solution 2 in Case 2, because the first duration and the second duration may be different, there may be a case in which one of the timers first ends timing to perform GNSS measurement, but the other timer has not ended timing. To reduce a quantity of GNSS measurements, if a to-be-adjusted amount corresponding to the timer that has not ended timing changes excessively, the terminal device may perform GNSS measurement after the timer that ends timing first ends timing, or adjust both the oscillator frequency offset and the timing advance based on an adjustment indication of the network device. Alternatively, when one of the two timers ends first, the terminal device is configured to perform GNSS measurement by default, or adjust both the oscillator frequency offset and the timing advance based on an adjustment indication of the network device.

The following separately describes the foregoing three scenarios in two cases: the first duration is less than the second duration and the first duration is greater than or equal to the second duration.
1. When the first duration is less than the second duration, that is, the second duration is greater than the first duration:
   In a possible scenario 1, the terminal device may adjust the oscillator frequency offset and the timing advance again based on a trigger of the network device.

Similar to Case 1 and the design solution 1 in Case 2, in a possible design 1, the network device may send frequency offset and time offset adjustment information to the terminal device, to indicate the terminal device to re-adjust the oscillator frequency offset or the oscillator frequency offset and the timing advance without performing GNSS measurement.

In this design 1, in a possible implementation 1, before the first time period ends, the network device may perform frequency offset and time offset detection on the uplink signal in advance, and send frequency offset adjustment information or the frequency offset and time offset adjustment information to the terminal device, so that the terminal device can trigger adjustment of the oscillator frequency offset and the timing advance in advance before the first time period ends, without performing GNSS measurement.

For example, the network device may send third information to the terminal device within the first time period. Correspondingly, the terminal device may receive the third information from the network device within the first time period. The third information indicates the terminal device to adjust the oscillator frequency offset and the timing advance. The third information may include an adjustment parameter of the oscillator frequency offset and an adjustment parameter of the timing advance. The adjustment parameter of the oscillator frequency offset and the adjustment parameter of the timing advance may be obtained by the network device by performing frequency offset and time offset detection on the uplink signal within the first time period. Therefore, the terminal device may adjust, based on the third information, the oscillator frequency offset and the timing advance before the first time period ends, without performing GNSS measurement for adjustment.

In a possible implementation 2, after the first time period ends, the network device may send the frequency offset adjustment information or the frequency offset and time offset adjustment information to the terminal device, to indicate the terminal device to re-adjust the oscillator frequency offset and the timing advance without performing GNSS measurement.

For example, the network device may send third information to the terminal device within a second preset duration starting from an end of the first time period. Correspondingly, the terminal device may receive the third information from the network device within a first preset duration starting from the end of the first time period. For a specific description of the third information, refer to the related description in the foregoing implementation 2. Details are not described herein again.

For the foregoing implementation 1 and implementation 2, after the adjustment is completed, the network device and the terminal device may further synchronously trigger the first duration and the second duration again. For example, within a fifth time period having a duration equal to the first duration, the network device may determine not to perform frequency offset detection on the uplink signal, and within a sixth time period having a duration equal to the second duration, the network device may determine not to perform time-frequency offset detection on the uplink signal. Correspondingly, within a fifth time period having a duration equal to the first duration, the terminal device may determine not to perform GNSS measurement to adjust the oscillator frequency offset, and within a sixth time period having a duration equal to the second duration, the terminal device may determine not to perform GNSS measurement to adjust the timing advance. For the network device side, a start time of the fifth time period and a sixth time period are a moment at which the third information is sent plus the second preset duration; and for the terminal device, a start time of the fifth time period and a sixth time period are a moment at which the third information is received plus the first preset duration.

In a possible design 2, the network device may not send frequency offset adjustment information or frequency offset and time offset adjustment information to trigger the terminal device to perform adjustment, and the network device may trigger the terminal device to perform GNSS measurement, to adjust the oscillator frequency offset or the oscillator frequency offset and the timing advance. Similar to the foregoing design 1, the network device may trigger within the first time period, that is, trigger in advance, or may trigger after the first time period. Different from the foregoing design 1, third information in the design 2 indicates the terminal device to perform GNSS measurement. Details are not described herein again.

In a possible scenario 2, the terminal device may actively trigger to perform GNSS measurement to adjust the oscillator frequency offset or the oscillator frequency offset and the timing advance again.

In this scenario 2, in a possible design 1, the terminal device may determine, at the end moment of the first time period, to perform GNSS measurement, to adjust the oscillator frequency offset and the timing advance. In other words, a timing duration for adjusting the oscillator frequency offset is less than a timing duration for adjusting the timing advance, and the terminal device performs, when a timer with a shorter timing duration ends, GNSS measurement to adjust both the oscillator frequency offset and the timing advance.

In this design 1, the following case still exists: The network device does not send the third information within the first time period, and therefore the terminal device fails to receive the third information. In this case, the network device may consider by default that the terminal device performs GNSS measurement at the end moment of the first time period. Alternatively, the network device sends the third information within the first time period, but the terminal device fails to receive the third information. Therefore, the terminal device may actively trigger to perform GNSS measurement at the end moment of the first time period. In other words, in some possible cases, this may be replaced with: The terminal device fails to receive the third information within the first time period, so that the terminal device may determine to perform GNSS measurement at the end moment of the first time period.

Optionally, after performing GNSS measurement, the terminal device may notify the network device of indication information, so that the network device may trigger the first duration and the second duration again based on the indication information.

Further, after the terminal device performs GNSS measurement, the terminal device may also trigger the first duration and the second duration again. For example, within a third time period having a duration equal to the first duration, the terminal device determines not to perform GNSS measurement to adjust the oscillator frequency offset, and within a fourth time period having a duration equal to the second duration, the terminal device determines not to perform GNSS measurement to adjust the timing advance. A start time of the third time period and a start time of the fourth time period may be a moment at which GNSS measurement is performed last time (latest time) plus the first preset duration.

In a possible design 2, if the terminal device fails to receive the third information from the network device from a start of the first time period to an end of the first time period, the terminal device may wait for a period of time after the first time period ends, to determine whether the third information from the network device can be received. If the third information still fails to be received after the terminal device waits for the period of time, the terminal device may determine to perform GNSS measurement. For a specific implementation process, refer to the related descriptions of the design 2 in the foregoing scenario 2. Details are not described herein again. After the adjustment, the terminal device may trigger the first duration and the second duration again. For example, a triggering moment is a moment at which adjustment of the oscillator frequency offset and the timing advance is completed. This is not limited herein.

In a possible scenario 3, if the terminal device has performed GNSS measurement within the first time period, the terminal device may send fourth information to the network device. Correspondingly, the network device receives the fourth information from the terminal device within the first time period. The fourth information indicates that the terminal device has performed GNSS measurement within the first time period. For a specific description of the fourth information, refer to the related descriptions of the fourth information in Case 1 and the design solution 1 in Case 2. Details are not described herein again. In other words, if the terminal device has performed GNSS measurement within the first time period, the terminal device needs to notify the network device.

Further, after having performed GNSS measurement, the terminal device needs to re-trigger the first duration and the second duration. Correspondingly, after receiving the fourth information, the network device also needs to re-trigger the first duration and the second duration. For example, within a seventh time period having a duration equal to the first duration, the terminal device may determine not to perform GNSS measurement to adjust the oscillator frequency offset, and within an eighth time period having a duration equal to the second duration, the terminal device may determine not to perform GNSS measurement to adjust the timing advance. A start time of the seventh time period and a start time of the eighth time period are a moment at which the fourth information is sent plus a first preset duration.

Correspondingly, within the seventh time period having a duration equal to the first duration, the network device may determine not to perform frequency offset detection on the uplink signal, and within the eighth time period having a duration equal to the second duration, the network device may determine not to perform time offset detection on the uplink signal. The start time of the seventh time period and the start time of the eighth time period are the moment at which the fourth information is sent plus the first preset duration.

It should be understood that, for specific implementation processes in the three scenarios in the design solution 2 in Case 2, refer to the specific implementation processes in the three scenarios in Case 1 and the design solution 1 in Case 2. Details are not described herein again. A difference lies in that, it is required to determine values of the two durations and perform a related action in the shorter duration and the two durations need to be triggered at the same time, to reduce a quantity of GNSS measurements performed by the terminal device.

2. When the first duration is greater than or equal to the second duration, that is, the second duration is less than or equal to the first duration:
In this case, the foregoing three scenarios still exist. A difference from the case in which the first duration is less than the second duration is that a related action is performed by using the second time period as a determining criterion. Details are as follows:
In the design 1 of the foregoing possible scenario 1, in a possible implementation 1, before the second time period ends, the network device may perform frequency offset and time offset detection on the uplink signal in advance, and send frequency offset adjustment information or the frequency offset and time offset adjustment information to the terminal device, so that the terminal device can trigger adjustment of the oscillator frequency offset and the timing advance in advance before the second time period ends, without performing GNSS measurement. For example, the network device may send third information to the terminal device within the second time period. Correspondingly, the terminal device may receive the third information from the network device within the second time period. The third information indicates the terminal device to adjust the oscillator frequency offset and the timing advance. The third information may include an adjustment parameter of the oscillator frequency offset and an adjustment parameter of the timing advance. The adjustment parameter of the oscillator frequency offset and the adjustment parameter of the timing advance may be obtained by the network device by performing frequency offset and time offset detection on the uplink signal within the second time period.

In a possible implementation 2, after the second time period ends, the network device may send the frequency offset adjustment information or the frequency offset and time offset adjustment information to the terminal device, to indicate the terminal device to re-adjust the oscillator frequency offset and the timing advance without performing GNSS measurement. For example, the network device may send third information to the terminal device within a second preset duration starting from an end of the second time period. Correspondingly, the terminal device may receive the third information from the network device within a first preset duration starting from the end of the second time period.

In the design 2 of the foregoing possible scenario 1, the network device may not send frequency offset adjustment information or frequency offset and time offset adjustment information to trigger the terminal device to perform adjustment, and the network device may trigger the terminal device to perform GNSS measurement, to adjust the oscillator frequency offset or the oscillator frequency offset and the timing advance. Similar to the foregoing design 1, the network device may trigger within the second time period, that is, trigger in advance, or may trigger after the second time period. Different from the foregoing design 1, third information in the design 2 indicates the terminal device to perform GNSS measurement. Details are not described herein again.

In the design 1 of the foregoing possible scenario 2, the terminal device may determine, at an end moment of the second time period, to perform GNSS measurement, to adjust the oscillator frequency offset and the timing advance.

In the design 2 of the foregoing possible scenario 2, if the terminal device fails to receive the third information from the network device from a start of the second time period to an end of the second time period, the terminal device may wait for a period of time after the second time period ends, to determine whether the third information from the network device can be received. If the third information still fails to be received after the terminal device waits for the period of time, the terminal device may determine to perform GNSS measurement.

In the foregoing possible scenario 3, if the terminal device has performed GNSS measurement within the second time period, the terminal device may send fourth information to the network device. Correspondingly, the network device receives the fourth information from the terminal device within the second time period. The fourth information indicates that the terminal device has performed GNSS measurement within the second time period. For a specific description of the fourth information, refer to the related descriptions of the fourth information in Case 1 and the design solution 1 in Case 2. Details are not described herein again. In other words, if the terminal device has performed GNSS measurement within the second time period, the terminal device needs to notify the network device.

It should be understood that, when the first duration is greater than or equal to the second duration, for specific implementation processes of the network device and the terminal device in various scenarios, refer to the foregoing related descriptions of the case in which the first duration is less than the second duration. Details are not described herein again.

In the design solution 2 in Case 2, the network device configures two timing durations (the first duration and the second duration) for the terminal device based on the first information, to indicate the terminal device to trigger the two timing durations, and not perform GNSS measurement within the timing durations. This can reduce a frequency of performing GNSS measurement by the terminal device, thereby reducing energy consumption.

According to the communication method shown in FIG. 2, the network device configures a timing duration, for example, the first duration or the first duration and the second duration, for the terminal device based on the valid duration of the oscillator frequency offset or the valid duration of the oscillator frequency offset and the valid duration of the timing advance that are indicated by the first information reported by the terminal device, so that the terminal device can still maintain uplink frequency or uplink time-frequency synchronization without performing GNSS measurement within the configured timing duration. This can reduce a quantity of GNSS measurements performed by the terminal device, thereby reducing energy consumption of the terminal device. In addition, the network device may also perform closed-loop adjustment indication on the terminal device without performing frequency offset detection or time-frequency offset detection within the timing duration, thereby reducing a frequency of detecting a frequency offset of an uplink signal by the network device and reducing signaling overheads.

In the foregoing embodiments, the method and/or steps implemented by the network device may alternatively be implemented by a component (for example, a processor, a chip, a chip system, a circuit, a logical module, or software) that may be used in the network device, and the method and/or steps implemented by the terminal device may alternatively be implemented by a component (for example, a processor, a chip, a chip system, a circuit, a logical module, or software) that may be used in the terminal device.

The foregoing mainly describes the solutions provided in this application. Correspondingly, this application further provides a communication apparatus. The communication apparatus is configured to implement the methods in the foregoing method embodiments. The communication apparatus may be the network device in the foregoing method embodiments, an apparatus including the network device, or a component that can be used in the network device, for example, a chip or a chip system. Alternatively, the communication apparatus may be the terminal device in the foregoing method embodiments, an apparatus including the terminal device, or a component that can be used in the terminal device, for example, a chip or a chip system.

In some embodiments, to implement the foregoing functions, the communication apparatus includes corresponding hardware structures and/or software modules for performing the functions. A person skilled in the art should be easily aware that, in combination with units and algorithm steps of the examples described in embodiments disclosed in this specification, this application can be implemented in a form of hardware or combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used.

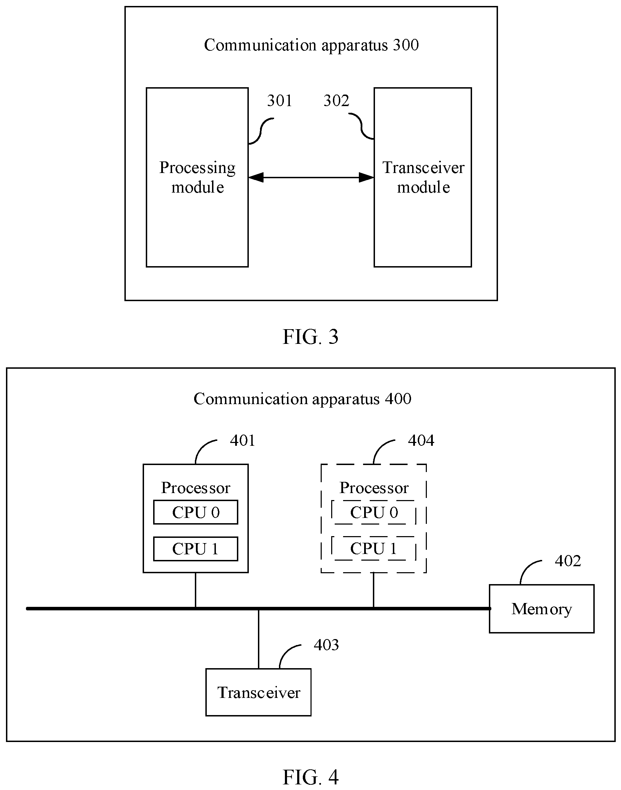

For example, the communication apparatus is the network device or the terminal device in the foregoing method embodiments. FIG. 3 is a diagram of a structure of a communication apparatus according to an embodiment of this application. As shown in FIG. 3, a communication apparatus 300 includes a processing module 301 and a transceiver module 302. The processing module 301 is configured to perform a processing function of the network device or the terminal device in the foregoing method embodiments. The transceiver module 302 is configured to perform a sending/receiving function of the network device or the terminal device in the foregoing method embodiments.

All related content of the steps in the foregoing method embodiments may be cited in function descriptions of the corresponding functional modules. Details are not described herein again.

The communication apparatus 300 provided in this embodiment can perform the foregoing method. Therefore, for technical effect that can be achieved by the communication apparatus 300, refer to the foregoing method embodiments. Details are not described herein again.

In a possible design solution, in this embodiment of this application, the transceiver module 302 may include a receiving module and a sending module (not shown in FIG. 3). The sending module and the receiving module are respectively configured to implement a sending function and a receiving function of the communication apparatus 300.

In a possible design solution, the communication apparatus 300 may further include a storage module (not shown in FIG. 3), and the storage module stores a program or instructions. When the processing module 301 executes the program or the instructions, the communication apparatus 300 is enabled to perform a function of the network device or the terminal device in the method shown in FIG. 2.

In some embodiments, the processing module 301 in the communication apparatus 300 may be implemented by a processor or a processor-related circuit component, and may be a processor or a processing unit; and the transceiver module 302 may be implemented by a transceiver or a transceiver-related circuit component, and may be a transceiver or a transceiver unit.

For example, FIG. 4 is a diagram of a structure of another communication apparatus according to an embodiment of this application. The communication apparatus may be a network device or a terminal device, or may be a chip (system) or another part or component that can be disposed in the network device or the terminal device. As shown in FIG. 4, a communication apparatus 400 may include a processor 401. In a possible design solution, the communication apparatus 400 may further include a memory 402 and/or a transceiver 403. The processor 401 is coupled to the memory 402 and the transceiver 403, for example, may be connected to the memory 402 and the transceiver 403 through a communication bus.

The following describes each component of the communication apparatus 400 in detail with reference to FIG. 4.

The processor 401 is a control center of the communication apparatus 400, and may be one processor, or may be a general term of a plurality of processing elements. For example, the processor 401 includes one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs) or one or more field programmable gate arrays (field programmable gate arrays, FPGAs).

In a possible design solution, the processor 401 may perform various functions of the communication apparatus 400 by running or executing a software program stored in the memory 402 and invoking data stored in the memory 402.

During specific implementation, in an embodiment, the processor 401 may include one or more CPUs, for example, a CPU 0 and a CPU 1 shown in FIG. 4.

During specific implementation, in an embodiment, the communication apparatus 400 may alternatively include a plurality of processors, for example, the processor 401 and a processor 404 shown in FIG. 4. Each of the processors may be a single-core processor, or may be a multicore processor. The processor herein may be one or more devices, circuits, and/or processing cores for processing data (for example, computer program instructions).

The memory 402 is configured to store a software program for performing the solutions of this application, and the processor 401 controls execution of the software program. For a specific implementation, refer to the foregoing method embodiments. Details are not described herein again.

In a possible design solution, the memory 402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 402 may be integrated with the processor 401, or may exist independently, and is coupled to the processor 401 via an interface circuit (not shown in FIG. 4) of the communication apparatus 400. This is not specifically limited in embodiments of this application.

The transceiver 403 is configured to communicate with another communication apparatus. For example, the communication apparatus 400 is a terminal device, and the transceiver 403 may be configured to communicate with an access network device or communicate with another terminal device. For another example, the communication apparatus 400 is a network device, and the transceiver 403 may be configured to communicate with a terminal device or communicate with another network device.

In a possible design solution, the transceiver 403 may include a receiver and a transmitter (not separately shown in FIG. 4). The receiver is configured to implement a receiving function, and the transmitter is configured to implement a sending function.

In a possible design solution, the transceiver 403 may be integrated with the processor 401, or may exist independently, and is coupled to the processor 401 via an interface circuit (not shown in FIG. 4) of the communication apparatus 400. This is not specifically limited in embodiments of this application.

It should be noted that the structure of the communication apparatus 400 shown in FIG. 4 does not constitute a limitation on the communication apparatus. An actual communication apparatus may include more or fewer components than those shown in the figure, or combine a part of the components, or have different layouts of the components.

In addition, for technical effect of the communication apparatus 400, refer to the technical effect of the method in the foregoing method embodiments. Details are not described herein again.

An embodiment of this application further provides a computer-readable storage medium storing a computer program or instructions. When the computer program or instructions are executed by a computer, functions in the foregoing method embodiments are implemented.

An embodiment of this application further provides a computer program product. When the computer program product is executed by a computer, functions in the foregoing method embodiments are implemented.

All or a part of the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed by a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may be aware that, the units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, an access network device, or the like) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, a term "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the claims and their equivalent technologies.

## Claims

1. A communication method, comprising:
sending first information to a network device, wherein the first information comprises first indication information, and the first indication information indicates a time interval from performing first global navigation satellite system GNSS measurement by a terminal device to adjust an oscillator frequency offset to performing second GNSS measurement to adjust the oscillator frequency offset; and
receiving second information from the network device, wherein the second information indicates that the terminal device is expected not to perform GNSS measurement within a first duration to adjust the oscillator frequency offset, and the first duration is determined based on the first information.

2. The method according to claim 1, wherein the first information further comprises second indication information, the second indication information indicates a time interval from performing the first GNSS measurement by the terminal device to adjust a timing advance to performing the second GNSS measurement to adjust the timing advance, and the second information further indicates that the terminal device is expected not to perform GNSS measurement within the first duration to adjust the timing advance.

3. The method according to claim 2, wherein the first duration is a smaller one between a valid duration of the oscillator frequency offset and a valid duration of the timing advance, the valid duration of the oscillator frequency offset is determined based on the first indication information, and the valid duration of the timing advance is determined based on the second indication information.

4. The method according to any one of claims 1 to 3, wherein the method further comprises:
determining, within a first time period having a duration equal to the first duration, not to perform GNSS measurement, wherein a start time of the first time period is a moment at which the second information is received plus a first preset duration.

5. The method according to claim 4, wherein the method further comprises:
receiving third information from the network device within the first preset duration starting from an end of the first time period, wherein the third information indicates the terminal device to adjust the oscillator frequency offset or adjust the oscillator frequency offset and the timing advance, and the third information comprises an adjustment parameter of the oscillator frequency offset or an adjustment parameter of the oscillator frequency offset and an adjustment parameter of the timing advance; and
determining, within a second time period having a duration equal to the first duration, not to perform GNSS measurement, wherein a start time of the second time period is a moment at which the third information is received plus the first preset duration.

6. The method according to claim 4, wherein the method further comprises:
determining, at an end moment of the first time period, to perform GNSS measurement.

7. The method according to claim 6, wherein determining, at the end moment of the first time period, to perform GNSS measurement comprises:
failing to receive third information within the first time period, wherein the third information indicates the terminal device to adjust the oscillator frequency offset or adjust the oscillator frequency offset and the timing advance, and the third information comprises an adjustment parameter of the oscillator frequency offset or an adjustment parameter of the oscillator frequency offset and an adjustment parameter of the timing advance; and
determining, at the end moment of the first time period, to perform GNSS measurement.

8. The method according to claim 4, wherein the method further comprises:
failing to receive third information within a third time period, wherein the third information indicates the terminal device to adjust the oscillator frequency offset or adjust the oscillator frequency offset and the timing advance, the third information comprises an adjustment parameter of the oscillator frequency offset or an adjustment parameter of the oscillator frequency offset and an adjustment parameter of the timing advance, and the third time period is the first time period plus the first preset duration; and
determining, at an end moment of the third time period, to perform GNSS measurement.

9. The method according to any one of claims 1 to 3, wherein the method further comprises:
sending fourth information to the network device within a first time period having a duration equal to the first duration, wherein the fourth information indicates that the terminal device has performed GNSS measurement within the first time period, and a start time of the first time period is a moment at which the second information is received plus a first preset duration; and
determining, within a fourth time period having a duration equal to the first duration, not to perform GNSS measurement, wherein a start time of the fourth time period is a moment at which the fourth information is sent plus the first preset duration.

10. The method according to claim 9, wherein the fourth information specifically indicates a remaining time before the terminal device performs the second GNSS measurement.

11. A communication method, wherein the method comprises:
receiving first information from a terminal device, wherein the first information comprises first indication information, and the first indication information indicates a time interval from performing first global navigation satellite system GNSS measurement by the terminal device to adjust an oscillator frequency offset to performing second GNSS measurement to adjust the oscillator frequency offset; and
sending second information to the terminal device, wherein the second information indicates that the terminal device is expected not to perform GNSS measurement within a first duration to adjust the oscillator frequency offset, and the first duration is determined based on the first information.

12. The method according to claim 11, wherein the first information further comprises second indication information, the second indication information indicates a time interval from performing the first GNSS measurement by the terminal device to adjust a timing advance to performing the second GNSS measurement to adjust the timing advance, and the second information further indicates that the terminal device is expected not to perform GNSS measurement within the first duration to adjust the timing advance.

13. The method according to claim 12, wherein the first duration is a smaller one between a valid duration of the oscillator frequency offset and a valid duration of the timing advance, the valid duration of the oscillator frequency offset is determined based on the first indication information, and the valid duration of the timing advance is determined based on the second indication information.

14. The method according to any one of claims 11 to 13, wherein the method further comprises:
determining, within a first time period having a duration equal to the first duration, not to perform frequency offset detection or frequency offset and time offset detection on an uplink signal, wherein a start time of the first time period is a moment at which the second information is sent plus a second preset duration.

15. The method according to claim 14, wherein the method further comprises:
sending third information to the terminal device within the second preset duration starting from an end of the first time period, wherein the third information indicates the terminal device to adjust the oscillator frequency offset or adjust the oscillator frequency offset and the timing advance, and the third information comprises an adjustment parameter of the oscillator frequency offset or an adjustment parameter of the oscillator frequency offset and an adjustment parameter of the timing advance; and
determining, within a second time period having a duration equal to the first duration, not to perform frequency offset detection or frequency offset and time offset detection on the uplink signal, wherein a start time of the second time period is a moment at which the third information is sent plus the second preset duration.

16. The method according to claim 14, wherein the method further comprises:
determining, within a third time period, not to send third information to the terminal device, wherein the third information indicates the terminal device to adjust the oscillator frequency offset or adjust the oscillator frequency offset and the timing advance, the third information comprises an adjustment parameter of the oscillator frequency offset or an adjustment parameter of the oscillator frequency offset and an adjustment parameter of the timing advance, and the third time period is the first time period plus the second preset duration.

17. The method according to any one of claims 11 to 13, wherein the method further comprises:
receiving fourth information from the terminal device within a first time period having a duration equal to the first duration, wherein the fourth information indicates that the terminal device has performed GNSS measurement within the first time period, and a start time of the first time period is a moment at which the second information is sent plus a second preset duration; and
determining, within a fourth time period having a duration equal to the first duration, not to perform frequency offset detection or frequency offset and time offset detection on an uplink signal, wherein a start time of the fourth time period is a moment at which the fourth information is received plus the second preset duration.

18. The method according to claim 17, wherein the fourth information specifically indicates a remaining time before the terminal device performs the second GNSS measurement.

19. The method according to any one of claims 1 to 18, wherein the first information is sent in a radio resource control RRC setup request message or an RRC connection setup complete message.

20. The method according to any one of claims 1 to 19, wherein the time interval from performing the first GNSS measurement to adjust the oscillator frequency offset to performing the second GNSS measurement to adjust the oscillator frequency offset is related to temperature.

21. A communication method, wherein the method comprises:
sending first information to a network device, wherein the first information comprises first indication information and second indication information, the first indication information indicates a time interval from performing first GNSS measurement by a terminal device to adjust an oscillator frequency offset to performing second GNSS measurement to adjust the oscillator frequency offset, and the second indication information indicates a time interval from performing the first GNSS measurement by the terminal device to adjust a timing advance to performing the second GNSS measurement to adjust the timing advance; and
receiving second information from the network device, wherein the second information indicates that the terminal device is expected not to perform GNSS measurement within a first duration to adjust the oscillator frequency offset, and indicates that the terminal device is expected not to perform GNSS measurement within a second duration to adjust the timing advance, the first duration is determined based on the first indication information, and the second duration is determined based on the second indication information.

22. The method according to claim 21, wherein the method further comprises:
determining, within a first time period having a duration equal to the first duration, not to perform GNSS measurement to adjust the oscillator frequency offset; and
determining, within a second time period having a duration equal to the second duration, not to perform GNSS measurement to adjust the timing advance, wherein a start time of the first time period and a start time of the second time period are a moment at which the second information is received plus a first preset duration.

23. The method according to claim 22, wherein the method further comprises:
when the first duration is less than the second duration, determining, at an end moment of the first time period, to perform GNSS measurement to adjust the oscillator frequency offset and the timing advance; or
when the first duration is greater than or equal to the second duration, determining, at an end moment of the second time period, to perform GNSS measurement to adjust the oscillator frequency offset and the timing advance.

24. The method according to claim 23, wherein determining, at the end moment of the first time period, to perform GNSS measurement to adjust the oscillator frequency offset and the timing advance comprises:
failing to receive third information within the first time period, wherein the third information indicates the terminal device to adjust the oscillator frequency offset and the timing advance, and the third information comprises an adjustment parameter of the oscillator frequency offset and an adjustment parameter of the timing advance; and
determining, at the end moment of the first time period, to perform GNSS measurement to adjust the oscillator frequency offset and the timing advance.

25. The method according to claim 23, wherein determining, at the end moment of the second time period, to perform GNSS measurement to adjust the oscillator frequency offset and the timing advance comprises:
failing to receive third information within the second time period, wherein the third information indicates the terminal device to adjust the oscillator frequency offset and the timing advance, and the third information comprises an adjustment parameter of the oscillator frequency offset and an adjustment parameter of the timing advance; and
determining, at the end moment of the second time period, to perform GNSS measurement to adjust the oscillator frequency offset and the timing advance.

26. The method according to any one of claims 23 to 25, wherein the method further comprises:
determining, within a third time period having a duration equal to the first duration, not to perform GNSS measurement to adjust the oscillator frequency offset; and
determining, within a fourth time period having a duration equal to the second duration, not to perform GNSS measurement to adjust the timing advance, wherein a start time of the third time period and a start time of the fourth time period are a moment at which GNSS measurement is performed last time plus the first preset duration.

27. The method according to claim 22, wherein the method further comprises:
receiving third information from the network device within the first time period or the second time period, wherein the third information indicates the terminal device to adjust the oscillator frequency offset and the timing advance, and the third information comprises an adjustment parameter of the oscillator frequency offset and an adjustment parameter of the timing advance;
determining, within a fifth time period having a duration equal to the first duration, not to perform GNSS measurement to adjust the oscillator frequency offset; and
determining, within a sixth time period having a duration equal to the second duration, not to perform GNSS measurement to adjust the timing advance, wherein a start time of the fifth time period and a start time of the sixth time period are a moment at which the third information is received plus the first preset duration.

28. The method according to claim 22, wherein the method further comprises:
sending fourth information to the network device within the first time period, wherein the fourth information indicates that the terminal device has performed GNSS measurement within the first time period; or
sending fourth information to the network device within the second time period, wherein the fourth information indicates that the terminal device has performed GNSS measurement within the second time period;
determining, within a seventh time period having a duration equal to the first duration, not to perform GNSS measurement to adjust the oscillator frequency offset; and
determining, within an eighth time period having a duration equal to the second duration, not to perform GNSS measurement to adjust the timing advance, wherein a start time of the seventh time period and a start time of the eighth time period are a moment at which the fourth information is sent plus the first preset duration.

29. The method according to claim 28, wherein the fourth information specifically indicates a remaining time before the terminal device performs the second GNSS measurement.

30. A communication method, wherein the method comprises:
receiving first information from a terminal device, wherein the first information comprises first indication information and second indication information, the first indication information indicates a time interval from performing first GNSS measurement by the terminal device to adjust an oscillator frequency offset to performing second GNSS measurement to adjust the oscillator frequency offset, and the second indication information indicates a time interval from performing the first GNSS measurement by the terminal device to adjust a timing advance to performing the second GNSS measurement to adjust the timing advance; and
sending second information to the terminal device, wherein the second information indicates that the terminal device is expected not to perform GNSS measurement within a first duration to adjust the oscillator frequency offset, and indicates that the terminal device is expected not to perform GNSS measurement within a second duration to adjust the timing advance, the first duration is determined based on the first indication information, and the second duration is determined based on the second indication information.

31. The method according to claim 30, wherein the method further comprises:
determining, within a first time period having a duration equal to the first duration, not to perform frequency offset detection on an uplink signal; and
determining, within a second time period having a duration equal to the second duration, not to perform time offset detection on the uplink signal, wherein a start time of the first time period and a start time of the second time period are a moment at which the second information is sent plus a second preset duration.

32. The method according to claim 31, wherein the method further comprises:
sending third information to the terminal device within the first time period or the second time period, wherein the third information indicates the terminal device to adjust the oscillator frequency offset and the timing advance, and the third information comprises an adjustment parameter of the oscillator frequency offset and an adjustment parameter of the timing advance;
determining, within a fifth time period having a duration equal to the first duration, not to perform frequency offset detection on the uplink signal; and
determining, within a sixth time period having a duration equal to the second duration, not to perform time offset detection on the uplink signal, wherein a start time of the fifth time period and a start time of the sixth time period are a moment at which the third information is sent plus the second preset duration.

33. The method according to claim 31, wherein the method further comprises:
receiving fourth information from the terminal device within the first time period, wherein the fourth information indicates that the terminal device has performed GNSS measurement within the first time period; or
receiving fourth information from the terminal device within the second time period, wherein the fourth information indicates that the terminal device has performed GNSS measurement within the second time period;
determining, within a seventh time period having a duration equal to the first duration, not to perform frequency offset detection on the uplink signal; and
determining, within an eighth time period having a duration equal to the second duration, not to perform time offset detection on the uplink signal, wherein a start time of the seventh time period and a start time of the eighth time period are a moment at which the fourth information is sent plus a first preset duration.

34. The method according to claim 33, wherein the fourth information specifically indicates a remaining time before the terminal device performs the second GNSS measurement.

35. The method according to any one of claims 30 to 34, wherein the first information is sent in an RRC setup request message or an RRC connection setup complete message.

36. The method according to any one of claims 30 to 35, wherein the time interval from performing the first GNSS measurement to adjust the oscillator frequency offset to performing the second GNSS measurement to adjust the oscillator frequency offset is related to temperature.

37. A communication apparatus, comprising a module configured to perform the method according to any one of claims 1 to 10, 19 and 20, 11 to 20, 21 to 29, 35 and 36, or 30 to 36.

38. A communication apparatus, comprising a processor, wherein the processor is configured to run a computer program or instructions, so that the method according to any one of claims 1 to 10, 19 and 20, 11 to 20, 21 to 29, 35 and 36, or 30 to 36 is implemented.

39. A communication chip, wherein the chip stores instructions, and when the chip runs on a communication device, the method according to any one of claims 1 to 10, 19 and 20, 11 to 20, 21 to 29, 35 and 36, or 30 to 36 is implemented.

40. A computer-readable storage medium, wherein the storage medium stores a computer program or instructions, and when the computer program or the instructions are executed by a communication apparatus, the method according to any one of claims 1 to 10, 19 and 20, 11 to 20, 21 to 29, 35 and 36, or 30 to 36 is implemented.

41. A computer program product, comprising computer program code, wherein when the computer program code is run on a communication apparatus, the communication apparatus implements the method according to any one of claims 1 to 10, 19 and 20, 11 to 20, 21 to 29, 35 and 36, or 30 to 36.
